# EUROPEAN PATENT APPLICATION

(11) **EP 4 332 756 A1**
(43) Date of publication of application: **06.03.2024**
(21) Application number: 22819188.8
(22) Date of filing: 07.04.2022
(51) Int. Cl.: G06F 8/61

(54) **APPLICATION DEPLOYMENT METHOD, DISTRIBUTED OPERATION SYSTEM, ELECTRONIC DEVICE, AND STORAGE MEDIUM**

(30) Priority: 08.06.2021 CN 202110640601
(71) Applicant: Huawei Technologies Co., Ltd., Shenzhen, Guangdong 518129 (CN)
(72) Inventor: YING, Guofeng, Shenzhen, Guangdong 518129 (CN); YU, Tao, Shenzhen, Guangdong 518129 (CN)
(74) Representative: Pfenning, Meinig & Partner mbB
(86) International application number: PCT/CN2022/085624
(87) International publication number: WO 2022/257583

(57) **Abstract**

An application deployment method, a distributed operating system, an electronic device, and a storage medium are provided, and relate to the field of electronic devices. The method is applied to a first device (110); the first device is connected to second devices (120, 130, 140, and 150); the first device (110) includes a first application; the first application includes a plurality of capability modules that are capable of being used for installation; and the capability module has a capability of implementing one or more functions. The method includes: The first device (110) determines, based on capability information of the second devices (120, 130, 140, and 150), a first target capability module suitable for installation on the second devices (120, 130, 140, and 150) from the plurality of capability modules included in the first application. The first device (110) sends the first target capability module to the second devices (120, 130, 140, and 150). According to the method, storage resources occupied by an application installation package on the second devices (120, 130, 140, and 150) can be greatly reduced, and a problem of application deployment on some of the second devices (120, 130, 140, and 150) that cannot be connected to a network can be resolved.

## Description

This application claims priority to Chinese Patent Application No. 202110640601.9, filed with the China National Intellectual Property Administration on June 8, 2021 and entitled "APPLICATION DEPLOYMENT METHOD, DISTRIBUTED OPERATING SYSTEM, ELECTRONIC DEVICE, AND STORAGE MEDIUM", which is incorporated herein by reference in its entirety.

### TECHNICAL FIELD

Embodiments of this application relate to the field of electronic devices, and in particular, to an application deployment method, a distributed operating system, an electronic device, and a storage medium.

### BACKGROUND

A distributed operating system is a next-generation all-scenario operating system formed by connecting a plurality of Internet of Things (Internet of Things, IoT) devices through a distributed network. In a distributed operating system, different IoT devices can perform collaborative work efficiently and flexibly. A corresponding application needs to be installed on each of the IoT devices in the distributed operating system to support a collaborative function of the IoT device, thereby implementing the collaborative work.

Currently, a manner of installing an application on each of IoT devices in a distributed operating system is: A manufacturer of the IoT device pre-installs a corresponding application before delivery of the IoT device. However, in this manner, storage resources of many IoT devices are limited. As a result, simultaneously pre-installing a large quantity of applications cannot be implemented. In addition, applications pre-installed on the IoT devices cannot be updated in time.

In another manner, the IoT device is connected to a network and downloads a corresponding application from a server (for example, a server of an application market). However, in this manner, some IoT devices that cannot be connected to the network cannot download any application from the server. In addition, when there are a relatively large quantity of IoT devices in the distributed operating system, a large quantity of IoT devices download applications from the server, which further increases load pressure of the server.

### SUMMARY

Embodiments of this application provide an application deployment method, a distributed operating system, an electronic device, and a storage medium, to greatly reduce storage resources occupied by an application installation package on an IoT device, and further resolve application deployment problems of some IoT devices that cannot be connected to a network.

According to a first aspect, an embodiment of this application provides an application deployment method. The method is applied to a first device. The first device is connected to a second device. The first device includes a first application. The first application includes a plurality of capability modules that are capable of being used for installation. Each capability module has a capability of implementing one or more functions. The method includes:
The first device determines, based on capability information of the second device, a first target capability module suitable for installation on the second device from the plurality of capability modules included in the first application. The first device sends the first target capability module to the second device.

Both the first device and the second device are IoT devices.

The first device may be an IoT device that has relatively rich device resources (such as a CPU resource, a memory resource, and a storage resource) and that can be connected to a network independently and can perform human-machine interaction. For example, the first device may be an IoT device such as a mobile phone, a tablet computer, or a notebook computer.

The second device may be any IoT device of a mobile phone, a tablet computer, a handwriting pad, a wearable device (for example, a watch, a wristband, or a headset), a large screen (for example, a smart screen), a notebook computer, an augmented reality (augmented reality, AR)/virtual reality (virtual reality, VR) device (for example, VR glasses), a car (or an on-board device), a camera, a sweeper, a rice cooker, a speaker, a treadmill, an ultra-mobile personal computer (ultra-mobile personal computer, UMPC), a netbook, a personal digital assistant (personal digital assistant, PDA), or the like. For example, the second device may be an IoT device that has fewer device resources than the first device and that cannot be connected to the network independently and/or cannot perform human-machine interaction. For example, the second device may be a handwriting pad, a headset, VR glasses, an on-board device, a rice cooker, a speaker, a treadmill, or the like. Alternatively, the second device may be the same as the first device, that is, the second device is an IoT device that has relatively rich device resources and that can be connected to the network independently and can perform human-machine interaction.

In this method, an application installation package in the first device is split into one or more capability modules based on different dimensions. The first device interacts with the second device, so that a corresponding capability module is deployed on the second device, to support the second device in implementing a corresponding function. This can not only greatly reduce storage resources occupied by the application installation package on the second device, but also resolve application deployment problems of some second devices that cannot be connected to the network.

In a possible design, before the first device determines, based on the capability information of the second device, the first target capability module suitable for installation on the second device from the plurality of capability modules included in the first application, the method further includes:
The first device receives a first message from the second device, where the first message includes the capability information of the second device.

In this design, the capability information of the second device may be reported to the first device by using the first message, so that the first device can determine, based on the capability information of the second device, the first target capability module suitable for installation on the second device from the plurality of capability modules included in the first application.

For example, the first device and the second device each may include a distributed network module. When the second device accesses a distributed network in which the first device is located, the second device learns, by using the distributed network module of the second device, that the first device includes a distributed application installation package, so that the second device may actively send the first message to the first device. The distributed network module may be an independent chip, or a software module integrated into a processor in an IoT device.

Optionally, a case in which the second device accesses the distributed network in which the first device is located may include: The second device accesses, for the first time, the distributed network in which the first device is located, and/or the second device accesses, again after being disconnected from the distributed network in which the first device is located, the distributed network in which the first device is located. For example, after being powered down or powered off, the second device may be disconnected from the distributed network in which the first device is located. Then, when the second device is powered up or powered on again, the second device may send the first message to the first device.

In another possible design, before the first device receives the first message from the second device, the method further includes:
The first device sends a query request message to the second device, where the query request message is used to query the capability information of the second device.

In this design, the first device may actively send the query request message to the second device, so as to trigger the second device to return the first message to the first device based on the query request message.

In some implementations, that the first device sends a query request message to the second device includes:
The first device sends the query request message to the second device when the second device establishes a connection to the first device.

In this implementation, a trigger condition for sending the query request message to the second device by the first device is: The second device establishes the connection to the first device. For example, when the second device accesses a local area network in which the first device is located, the first device may detect access of the second device. When detecting the access of the second device, the first device may actively send the query request message to the second device.

Alternatively, in some implementations, that the first device sends a query request message to the second device includes:
The first device displays a first interface, where the first interface includes device identifiers of one or more second devices. The first device receives a first operation, where the first operation is an operation of selecting a device identifier of the second device on the first interface. The first device sends the query request message to the second device in response to the first operation.

In this implementation, a trigger condition for sending the query request message to the second device by the first device is: The first device receives the first operation. For example, the first operation is actively selecting, by a user on the first interface, one or more second devices to which the query request message is to be sent. The first device may send, in response to the first operation of the user, the query request message to the second device actively selected by the user.

In some embodiments, each capability module included in the first application includes a configuration list corresponding to the capability module; and that the first device determines, based on capability information of the second device, a first target capability module suitable for installation on the second device from the plurality of capability modules included in the first application includes:
The first device determines, based on the capability information of the second device and the configuration list corresponding to each capability module included in the first application, the first target capability module suitable for installation on the second device from the plurality of capability modules included in the first application.

For example, the configuration list corresponding to each capability module includes one or more of a device type suitable for the capability module, a minimum device version requirement corresponding to the device type suitable for the capability module, a minimum device level suitable for the capability module, a hardware capability requirement of the capability module, a central processing unit-application binary interface CPU-ABI type supported by the capability module, and a scenario type suitable for the capability module.

For example, the capability information of the second device includes one or more of a device type, a device version, a device level, a device hardware capability, and a CPU-ABI type of the second device.

Device levels may be obtained by classifying IoT devices based on factors such as whether resources of the IoT devices are rich, and whether the IoT devices can be connected to the network independently and/or can perform human-machine interaction. For example, the IoT devices may be classified into level 0 to level 5 based on capabilities of running memories (random access memories, RAMs), storage memories (read only memories, ROMs), CPUs, and the like of the IoT devices, which correspond to L0 to L5, respectively. A higher level of an IoT device indicates better performance. A level classification manner of the IoT devices is not limited herein.

In a possible design, before the first device sends the first target capability module to the second device, the method further includes:
The first device sends attribute information of the first target capability module to the second device. The first device receives a download request message from the second device, where the download request message includes identification information of the first target capability module.

For example, the attribute information of the first target capability module includes one or more of the following: a capability name, version information, and a capability type of the first target capability module, a size of the first target capability module, a quantity of times that the first target capability module is used on the first device, and permission required by the first target capability module.

In this design, the second device may decide, based on the attribute information of the first target capability module, whether to install the first target capability module. The second device may send the download request message to the first device when deciding to install the first target capability module, where the download request message includes the identification information of the first target capability module. The first device may send the first target capability module to the second device after receiving the download request message.

In another possible design, the method further includes: The first device displays a second interface, where the second interface includes an installation prompt of the first target capability module. The first device receives a second operation, where the second operation is an operation of selecting to install the first target capability module. The first device sends a second message to the second device in response to the second operation, where the second message indicates the second device to install the first target capability module.

In this design, the user may select, on the second interface provided by the first device, whether to install the first target capability module on the second device. When receiving an operation (namely, the second operation) of selecting, by the user, to install the first target capability module, the first device may indicate, by using the second message, the second device to install the first target capability module.

In some embodiments, the first device is further connected to a third device. The method further includes: The first device determines, based on capability information of the third device, a second target capability module suitable for installation on the third device from the plurality of capability modules included in the first application. The first device sends the second target capability module to the third device.

Optionally, the first target capability module and the second target capability module are the same or different.

In other words, in this embodiment, the first device may be connected to a plurality of different devices such as the second device and the third device. The first device may determine, based on capability information of different devices connected to the first device, a target capability module suitable for installation on each device from the plurality of capability modules included in the first application, and send, to the device, the target capability module suitable for installation on the device.

It may be understood that, for specific implementation logic of interaction between the first device and the third device or even a fourth device, a fifth device, or the like, refer to the logic of interaction between the first device and the second device. Details are not described herein again.

According to a second aspect, an embodiment of this application provides an application deployment apparatus. The apparatus may be used in a first device, and is configured to implement the application deployment method according to the first aspect. A function of the apparatus may be implemented by hardware, or may be implemented by hardware executing corresponding software. The hardware or the software includes one or more modules or units corresponding to the foregoing function. For example, the apparatus may include a sending unit, a receiving unit, a processing unit, and the like.

The sending unit, the receiving unit, and the processing unit may be configured to cooperate in implementing the application deployment method according to the first aspect. For example, the sending unit may be configured to send a first target capability module to a second device. The receiving unit may be configured to receive a first message from the second device. The processing unit may be configured to determine, based on capability information of the second device, the first target capability module suitable for installation on the second device and the like from a plurality of capability modules included in the first application.

It should be understood that the apparatus may be configured to implement all the functions of the application deployment method according to the first aspect. Details are not described again.

According to a third aspect, an embodiment of this application provides an electronic device, including a processor, a memory, and a computer program. The computer program is stored in the memory. When the computer program is executed by the processor, the electronic device is enabled to implement the method according to the first aspect and any one of the possible implementations of the first aspect.

According to a fourth aspect, an embodiment of this application provides a computer-readable storage medium. The computer-readable storage medium includes a computer program. When the computer program runs on an electronic device, the electronic device is enabled to implement the method according to the first aspect and any one of the possible implementations of the first aspect.

According to a fifth aspect, an embodiment of this application further provides a computer program product, including computer-readable code. When the computer-readable code runs in an electronic device, the electronic device is enabled to implement the method according to the first aspect and any one of the possible implementations of the first aspect.

For beneficial effects of the second aspect to the fifth aspect, refer to the description in the first aspect. Details are not described herein again.

According to a sixth aspect, an embodiment of this application further provides an application deployment method. The method is applied to a second device. The second device is connected to a first device. The first device includes a first application. The first application includes a plurality of capability modules that are capable of being used for installation. Each capability module has a capability of implementing one or more functions. The method includes:

The second device receives a first target capability module from the first device, where the first target capability module is one of the plurality of capability modules included in the first application. The second device installs the first target capability module.

After installing the first target capability module, the second device may implement a corresponding function by using the first target capability module.

In this method, an application installation package in the first device is split into one or more capability modules based on different dimensions. The first device interacts with the second device, so that a corresponding capability module is deployed on the second device, to support the second device in implementing a corresponding function. This can not only greatly reduce storage resources occupied by the application installation package on the second device, but also resolve application deployment problems of some second devices that cannot be connected to a network.

In a possible design, the method further includes: The second device sends a first message to the first device, where the first message includes capability information of the second device.

In this design, the capability information of the second device may be reported to the first device by using the first message, so that the first device can determine, based on the capability information of the second device, the first target capability module suitable for installation on the second device from the plurality of capability modules included in the first application.

In another possible design, before the second device sends the first message to the first device, the method further includes:
The second device receives a query request message from the first device, where the query request message is used to query the capability information of the second device.

In this design, the second device may send the first message to the first device after receiving the query request message from the first device.

In still another possible design, that the second device sends a first message to the first device includes:
The second device sends the first message to the first device when the second device establishes a connection to the first device.

For example, the first device and the second device each may include a distributed network module. When the second device accesses a distributed network in which the first device is located, the second device learns, by using the distributed network module of the second device, that the first device includes a distributed application installation package, so that the second device may actively send the first message to the first device. The distributed network module may be an independent chip, or a software module integrated into a processor in an IoT device.

Optionally, a case in which the second device accesses the distributed network in which the first device is located may include: The second device accesses, for the first time, the distributed network in which the first device is located, and/or the second device accesses, again after being disconnected from the distributed network in which the first device is located, the distributed network in which the first device is located. For example, after being powered down or powered off, the second device may be disconnected from the distributed network in which the first device is located. Then, when the second device is powered up or powered on again, the second device may send the first message to the first device.

Optionally, the capability information of the second device includes one or more of a device type, a device version, a device level, a device hardware capability, and a CPU-ABI type of the second device.

In some embodiments, before the second device receives the first target capability module from the first device, the method further includes:
The second device sends a download request message to the first device, where the download request message includes identification information of the first target capability module.

In a possible design, that the second device sends a download request message to the first device includes:
The second device receives attribute information of the first target capability module from the first device. The second device decides, based on the attribute information of the first target capability module, whether to install the first target capability module. The second device sends the download request message to the first device when the second device decides to install the first target capability module.

In this design, the second device may decide, based on the attribute information of the first target capability module, whether to install the first target capability module. The second device may send the download request message to the first device when deciding to install the first target capability module, where the download request message includes the identification information of the first target capability module. The first device may send the first target capability module to the second device after receiving the download request message.

For example, the attribute information of the first target capability module includes one or more of the following: a capability name, version information, and a capability type of the first target capability module, a size of the first target capability module, a quantity of times that the first target capability module is used on the first device, and permission required by the first target capability module.

Optionally, the second device includes a preset decision condition. That the second device decides, based on the attribute information of the first target capability module, whether to install the first target capability module includes:
When determining, based on the attribute information of the first target capability module, that the first target capability module meets the decision condition, the second device decides to install the first target capability module.

For example, the decision condition includes one or more of the following: remaining storage space of the second device is greater than the size of the first target capability module, remaining power of the second device is greater than a first threshold, the second device is currently in a screen-off and charging state, the quantity of times that the first target capability module is used on the first device is greater than a second threshold, and the permission required by the first target capability module does not include sensitive permission.

In some embodiments, the method further includes: The second device modifies the decision condition in response to a setting operation for the decision condition.

In this embodiment, a user may actively set the decision condition on the first device or the second device. The second device may modify the decision condition in response to the setting operation of the user for the decision condition. Then, the second device may decide, based on the decision condition set by the user, whether to install a capability module.

Optionally, that the second device installs the first target capability module includes:
The second device displays a third interface, where the third interface includes an installation prompt of the first target capability module. The second device receives a third operation, where the third operation is an operation of selecting to install the first target capability module. The second device installs the first target capability module in response to the third operation.

In this design, the user may select, on the third interface provided by the second device, whether to install the first target capability module on the second device. The second device may install the first target capability module when receiving an operation (namely, the third operation) of selecting, by the user, to install the first target capability module.

In the sixth aspect, for beneficial effects generated by some of steps corresponding to the first aspect, refer to the description in the first aspect. Details are not described again.

According to a seventh aspect, an embodiment of this application provides an application deployment apparatus. The apparatus may be used in a second device, and is configured to implement the application deployment method according to the sixth aspect. A function of the apparatus may be implemented by hardware, or may be implemented by hardware executing corresponding software. The hardware or the software includes one or more modules or units corresponding to the foregoing function. For example, the apparatus may include a sending unit, a receiving unit, a processing unit, and the like.

The sending unit, the receiving unit, and the processing unit may be configured to cooperate in implementing the application deployment method according to the sixth aspect. For example, the sending unit may be configured to send a first message to a first device. The receiving unit may be configured to receive a first target capability module from the first device. The processing unit may be configured to decide whether to install the first target capability module or the like.

It should be understood that the apparatus may be configured to implement all the functions of the application deployment method according to the sixth aspect. Details are not described again.

According to an eighth aspect, an embodiment of this application provides an electronic device, including a processor, a memory, and a computer program. The computer program is stored in the memory. When the computer program is executed by the processor, the electronic device is enabled to implement the method according to the sixth aspect and any one of the possible implementations of the sixth aspect.

According to a ninth aspect, an embodiment of this application provides a computer-readable storage medium. The computer-readable storage medium includes a computer program. When the computer program runs on an electronic device, the electronic device is enabled to implement the method according to the sixth aspect and any one of the possible implementations of the sixth aspect.

According to a tenth aspect, an embodiment of this application further provides a computer program product, including computer-readable code. When the computer-readable code runs in an electronic device, the electronic device is enabled to implement the method according to the sixth aspect and any one of the possible implementations of the sixth aspect.

For beneficial effects of the seventh aspect to the tenth aspect, refer to the description in the sixth aspect. Details are not described herein again.

According to an eleventh aspect, an embodiment of this application provides a distributed operating system, including a first device and a second device. The first device is connected to the second device. The first device includes a first application. The first application includes a plurality of capability modules that are capable of being used for installation. The first device may determine, based on capability information of the second device, a first target capability module suitable for installation on the second device from the plurality of capability modules included in the first application, and send the first target capability module to the second device. The second device may receive and install the first target capability module.

After installing the first target capability module, the second device may implement a corresponding function by using the first target capability module.

Both the first device and the second device are IoT devices. The first device may be an IoT device that has relatively rich device resources (such as a CPU resource, a memory resource, and a storage resource) and that can be connected to a network independently and can perform human-machine interaction. For example, the first device may be an IoT device such as a mobile phone, a tablet computer, or a notebook computer.

The second device may be any IoT device of a mobile phone, a tablet computer, a handwriting pad, a wearable device (for example, a watch, a wristband, or a headset), a large screen (for example, a smart screen), a notebook computer, an augmented reality (augmented reality, AR)/virtual reality (virtual reality, VR) device (for example, VR glasses), a car (or an on-board device), a camera, a sweeper, a rice cooker, a speaker, a treadmill, an ultra-mobile personal computer (ultra-mobile personal computer, UMPC), a netbook, a personal digital assistant (personal digital assistant, PDA), or the like. For example, the second device may be an IoT device that has fewer device resources than the first device and that cannot be connected to the network independently and/or cannot perform human-machine interaction. For example, the second device may be a handwriting pad, a headset, VR glasses, an on-board device, a rice cooker, a speaker, a treadmill, or the like. Alternatively, the second device may be the same as the first device, that is, the second device is an IoT device that has relatively rich device resources and that can be connected to the network independently and can perform human-machine interaction.

In the distributed operating system, an application installation package in the first device is split into one or more capability modules based on different dimensions. The first device interacts with the second device, so that a corresponding capability module is deployed on the second device, to support the second device in implementing a corresponding function. This can not only greatly reduce storage resources occupied by the application installation package on the second device, but also resolve application deployment problems of some second devices that cannot be connected to the network.

Optionally, the second device may send a first message to the first device, where the first message includes the capability information of the second device. After receiving the first message, the first device may determine, based on the capability information of the second device included in the first message, the first target capability module suitable for installation on the second device from the plurality of capability modules included in the first application.

In this design, the capability information of the second device may be reported to the first device by using the first message, so that the first device can determine, based on the capability information of the second device, the first target capability module suitable for installation on the second device from the plurality of capability modules included in the first application.

In a possible design, the first device may send a query request message to the second device, where the query request message is used to query the capability information of the second device. The second device may send the first message to the first device after receiving the query request message from the first device.

In this design, the first device may actively send the query request message to the second device, so as to trigger the second device to return the first message to the first device based on the query request message.

In some implementations, the first device may send the query request message to the second device when the second device establishes a connection to the first device.

In this implementation, a trigger condition for sending the query request message to the second device by the first device is: The second device establishes the connection to the first device. For example, when the second device accesses a local area network in which the first device is located, the first device may detect access of the second device. When detecting the access of the second device, the first device may actively send the query request message to the second device.

In some other implementations, the first device may display a first interface, where the first interface includes device identifiers of one or more second devices. The first device may receive a first operation, where the first operation is an operation of selecting a device identifier of the second device on the first interface. The first device may send the query request message to the second device in response to the first operation.

In this implementation, a trigger condition for sending the query request message to the second device by the first device is: The first device receives the first operation. For example, the first operation is actively selecting, by a user on the first interface, one or more second devices to which the query request message is to be sent. The first device may send, in response to the first operation of the user, the query request message to the second device actively selected by the user.

In another possible design, the second device may send the first message to the first device when the second device establishes a connection to the first device.

For example, the first device and the second device each may include a distributed network module. When the second device accesses a distributed network in which the first device is located, the second device learns, by using the distributed network module of the second device, that the first device includes a distributed application installation package, so that the second device may actively send the first message to the first device. The distributed network module may be an independent chip, or a software module integrated into a processor in an IoT device.

Optionally, a case in which the second device accesses the distributed network in which the first device is located may include: The second device accesses, for the first time, the distributed network in which the first device is located, and/or the second device accesses, again after being disconnected from the distributed network in which the first device is located, the distributed network in which the first device is located. For example, after being powered down or powered off, the second device may be disconnected from the distributed network in which the first device is located. Then, when the second device is powered up or powered on again, the second device may send the first message to the first device.

In some embodiments, each capability module included in the first application includes a configuration list corresponding to the capability module. That the first device determines, based on capability information of the second device, a first target capability module suitable for installation on the second device from the plurality of capability modules included in the first application includes: The first device determines, based on the capability information of the second device and the configuration list corresponding to each capability module included in the first application, the first target capability module suitable for installation on the second device from the plurality of capability modules included in the first application.

For example, the configuration list corresponding to each capability module includes one or more of a device type suitable for the capability module, a minimum device version requirement corresponding to the device type suitable for the capability module, a minimum device level suitable for the capability module, a hardware capability requirement of the capability module, a central processing unit-application binary interface CPU-ABI type supported by the capability module, and a scenario type suitable for the capability module.

For example, the capability information of the second device includes one or more of a device type, a device version, a device level, a device hardware capability, and a CPU-ABI type of the second device.

Device levels may be obtained by classifying IoT devices based on factors such as whether resources of the IoT devices are rich, and whether the IoT devices can be connected to the network independently and/or can perform human-machine interaction. For example, the IoT devices may be classified into level 0 to level 5 based on capabilities of running memories (random access memories, RAMs), storage memories (read only memories, ROMs), CPUs, and the like of the IoT devices, which correspond to L0 to L5, respectively. A higher level of an IoT device indicates better performance. A level classification manner of the IoT devices is not limited herein.

In a possible design, the first device may send attribute information of the first target capability module to the second device. The second device may receive the attribute information of the first target capability module from the first device, and decide, based on the attribute information of the first target capability module, whether to install the first target capability module. The second device may send a download request message to the first device when the second device decides to install the first target capability module. The first device may receive the download request message from the second device, where the download request message includes identification information of the first target capability module. After receiving the download request message, the first device may send the first target capability module to the second device based on the identification information of the first target capability module.

For example, the attribute information of the first target capability module includes one or more of the following: a capability name, version information, and a capability type of the first target capability module, a size of the first target capability module, a quantity of times that the first target capability module is used on the first device, and permission required by the first target capability module.

In this design, the second device may decide, based on the attribute information of the first target capability module, whether to install the first target capability module. The second device may send the download request message to the first device when deciding to install the first target capability module, where the download request message includes the identification information of the first target capability module. The first device may send the first target capability module to the second device after receiving the download request message.

Optionally, the second device includes a preset decision condition. That the second device decides, based on the attribute information of the first target capability module, whether to install the first target capability module includes: When determining, based on the attribute information of the first target capability module, that the first target capability module meets the decision condition, the second device decides to install the first target capability module.

For example, the decision condition includes one or more of the following: remaining storage space of the second device is greater than the size of the first target capability module, remaining power of the second device is greater than a first threshold, the second device is currently in a screen-off and charging state, the quantity of times that the first target capability module is used on the first device is greater than a second threshold, and the permission required by the first target capability module does not include sensitive permission.

In some embodiments, the second device may modify the decision condition in response to a setting operation for the decision condition.

In this embodiment, a user may actively set the decision condition on the first device or the second device. The second device may modify the decision condition in response to the setting operation of the user for the decision condition. Then, the second device may decide, based on the decision condition set by the user, whether to install a capability module.

In another possible design, the first device may display a second interface, where the second interface includes an installation prompt of the first target capability module. The first device may receive a second operation, where the second operation is an operation of selecting to install the first target capability module. The first device may send a second message to the second device in response to the second operation, where the second message indicates the second device to install the first target capability module.

In this design, the user may select, on the second interface provided by the first device, whether to install the first target capability module on the second device. When receiving an operation (namely, the second operation) of selecting, by the user, to install the first target capability module, the first device may indicate, by using the second message, the second device to install the first target capability module.

In still another possible design, the second device may display a third interface, where the third interface includes an installation prompt of the first target capability module. The second device may receive a third operation, where the third operation is an operation of selecting to install the first target capability module. The second device may install the first target capability module in response to the third operation.

In this design, the user may select, on the third interface provided by the second device, whether to install the first target capability module on the second device. The second device may install the first target capability module when receiving an operation (namely, the third operation) of selecting, by the user, to install the first target capability module.

In some embodiments, the distributed operating system further includes a third device. The first device is connected to the third device. The first device may determine, based on capability information of the third device, a second target capability module suitable for installation on the third device from the plurality of capability modules included in the first application, and send the second target capability module to the third device. The third device may receive and install the second target capability module.

Optionally, the first target capability module and the second target capability module are the same or different.

In other words, in this embodiment, the first device may be connected to a plurality of different devices such as the second device and the third device. The first device may determine, based on capability information of different devices connected to the first device, a target capability module suitable for installation on each device from the plurality of capability modules included in the first application, and send, to the device, the target capability module suitable for installation on the device.

Similarly, in the distributed operating system, the first device may be configured to implement all the functions of the application deployment method according to the first aspect, and the second device may be configured to implement all the functions of the application deployment method according to the sixth aspect. Details are not described herein again.

For beneficial effects of the eleventh aspect, refer to the descriptions in the first aspect and the sixth aspect. Details are not described herein again.

It should be understood that descriptions of technical features, technical solutions, beneficial effects, or similar statements in this application do not imply that all features and advantages can be implemented in any single embodiment. On the contrary, it may be understood that the descriptions of the features or the beneficial effects mean that at least one embodiment includes a specific technical feature, technical solution, or beneficial effect. Therefore, the descriptions of the technical features, the technical solutions, or the beneficial effects in this specification may not necessarily be specific to a same embodiment. Further, the technical features, the technical solutions, and the beneficial effects described in the embodiments may be combined in any proper manner. A person skilled in the art may understand that a specific embodiment may be implemented without using one or more specific technical features, technical solutions, or beneficial effects of the embodiment. In other embodiments, additional technical features and beneficial effects may further be identified in a specific embodiment that does not reflect all the embodiments.

### BRIEF DESCRIPTION OF DRAWINGS

FIG. 1 is a schematic diagram of an implementation scenario of a distributed operating system according to an embodiment of this application;
FIG. 2 is a schematic flowchart of an application deployment method according to an embodiment of this application;
FIG. 3 is a schematic diagram of a setting interface of a mobile phone 110 according to an embodiment of this application;
FIG. 4 is a schematic diagram of an application collaboration interface of a mobile phone 110 according to an embodiment of this application;
FIG. 5 is a schematic diagram of composition of an installation package of a first social software application according to an embodiment of this application;
FIG. 6 is a schematic flowchart of deciding, by a watch 120, whether to install a deployment package of a text chat capability according to an embodiment of this application;
FIG. 7 is a schematic diagram of an architecture of a first IoT device and a second IoT device according to an embodiment of this application;
FIG. 8 is a schematic diagram of hardware composition of an IoT device according to an embodiment of this application;
FIG. 9 is a schematic diagram of a structure of an application deployment apparatus according to an embodiment of this application; and
FIG. 10 is a schematic diagram of another structure of an application deployment apparatus according to an embodiment of this application.

### DESCRIPTION OF EMBODIMENTS

Terms used in the following embodiments are merely intended to describe specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly. It should be further understood that, in the following embodiments of this application, "at least one" and "one or more" mean one, two, or more. A character "/" generally indicates an "or" relationship between associated objects.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in still some other embodiments" that appear at different places in this specification do not necessarily refer to a same embodiment. Instead, the statements mean "one or more but not all of embodiments", unless otherwise especially emphasized in another manner. The terms "include", "comprise", "have", and their variants all mean "include but are not limited to", unless otherwise specifically emphasized in another manner. The term "connection" includes a direct connection and an indirect connection, unless otherwise specified.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features.

In embodiments of this application, the word "example", "for example", or the like is used to represent giving an example, an illustration, or a description. Any embodiment or design scheme described as "example" or "for example" in embodiments of this application should not be explained as being more preferred or having more advantages than another embodiment or design scheme. Exactly, use of the word "example", "for example", or the like is intended to present a relative concept in a specific manner.

A distributed operating system is a next-generation all-scenario operating system formed by connecting a plurality of Internet of Things (Internet of Things, IoT) devices through a distributed network. In a distributed operating system, different IoT devices can perform collaborative work efficiently and flexibly.

The IoT devices may include a mobile phone, a tablet computer, a handwriting pad, a wearable device (for example, a watch, a wristband, or a headset), a large screen (for example, a smart screen), a notebook computer, an augmented reality (augmented reality, AR)/virtual reality (virtual reality, VR) device (for example, VR glasses), a car (or an on-board device), a camera, a sweeper, a rice cooker, a speaker, a treadmill, an ultra-mobile personal computer (ultra-mobile personal computer, UMPC), a netbook, a personal digital assistant (personal digital assistant, PDA), and the like.

For example, in a possible implementation scenario, user's home may include IoT devices such as a mobile phone, a refrigerator, a smart screen, a speaker, and a watch. The mobile phone, the refrigerator, the smart screen, the speaker, and the watch may form a distributed operating system through a local area network (for example, a Wi-Fi network connection). The local area network may be referred to as a distributed network. The IoT devices such as the mobile phone, the refrigerator, the smart screen, the speaker, and the watch may perform collaborative work with one another based on the distributed network. For example, the refrigerator may collaborate with the mobile phone to provide a shopping function for the user, the smart screen may collaborate with the mobile phone to provide a video play function and a call function for the user, the speaker may collaborate with the mobile phone to provide a music play function for the user, and the watch may collaborate with the mobile phone to provide a sports and health monitoring function for the user.

A corresponding application needs to be installed on each of the IoT devices in the distributed operating system to support a collaborative function of the IoT device, thereby implementing the collaborative work. For example, in the distributed operating system including the mobile phone, the refrigerator, the smart screen, the speaker, and the watch, a shopping application needs to be installed on the refrigerator, a video application and a call application need to be installed on the smart screen, a music application needs to be installed on the speaker, and a sports and health application needs to be installed on the watch.

Currently, a manner of installing an application on each of IoT devices in a distributed operating system is: A manufacturer of the IoT device pre-installs a corresponding application before delivery of the IoT device. However, in this manner, storage resources of many IoT devices are limited. As a result, simultaneously pre-installing a large quantity of applications cannot be implemented. In addition, applications pre-installed on the IoT devices cannot be updated in time.

In another manner, the IoT device is connected to a network and downloads a corresponding application from a server (for example, a server of an application market). However, in this manner, some IoT devices that cannot be connected to the network cannot download any application from the server. In addition, when there are a relatively large quantity of IoT devices in the distributed operating system, a large quantity of IoT devices download applications from the server, which further increases load pressure of the server.

Therefore, an embodiment of this application provides an application deployment method, which may be applied to a distributed operating system. The distributed operating system includes a first IoT device and at least one second IoT device.

The first IoT device may be an IoT device that has relatively rich device resources (such as a CPU resource, a memory resource, and a storage resource) and that can be connected to the network independently and can perform human-machine interaction. For example, the first IoT device may be an IoT device such as a mobile phone, a tablet computer, or a notebook computer.

The second IoT device may be any one of the foregoing IoT devices. For example, the second IoT device may be an IoT device that has fewer device resources than the first IoT device and that cannot be connected to the network independently and/or cannot perform human-machine interaction. For example, the second IoT device may be a handwriting pad, a headset, VR glasses, an on-board device, a rice cooker, a speaker, a treadmill, or the like. Alternatively, the second IoT device may be the same as the first IoT device, that is, the second IoT device is an IoT device that has relatively rich device resources and that can be connected to the network independently and can perform human-machine interaction.

Specific types of the second IoT device and the first IoT device are not limited in this application.

In this embodiment of this application, the first IoT device may also be referred to as a first device, and the second IoT device may also be referred to as a second device.

In some embodiments, the foregoing IoT device that has the relatively rich device resources and that can be connected to the network independently and can perform human-machine interaction may be referred to as a rich device. In addition, an IoT device that has a relatively small quantity of device resources and that cannot be connected to the network independently and/or cannot perform human-machine interaction may be referred to as a light device. In this embodiment of this application, the first IoT device may be a rich device, and the second IoT device may be a rich device or a light device.

Optionally, operating systems/an operating system of the first IoT device and/or the second IoT device may be a Harmony^{™} (Harmony) system, an Android^{™} (Android) system, an iOS^{™} system, a Windows^{™} system, a Mac^{™} system, a Linux^{™} system, an EMUI^{™} system, an Android Wear^{™} system, a LiteOS^{™} system, a Tizen^{™} system, a watchOS^{™} system, or the like. Alternatively, some IoT devices may have no operating system. This is not limited herein.

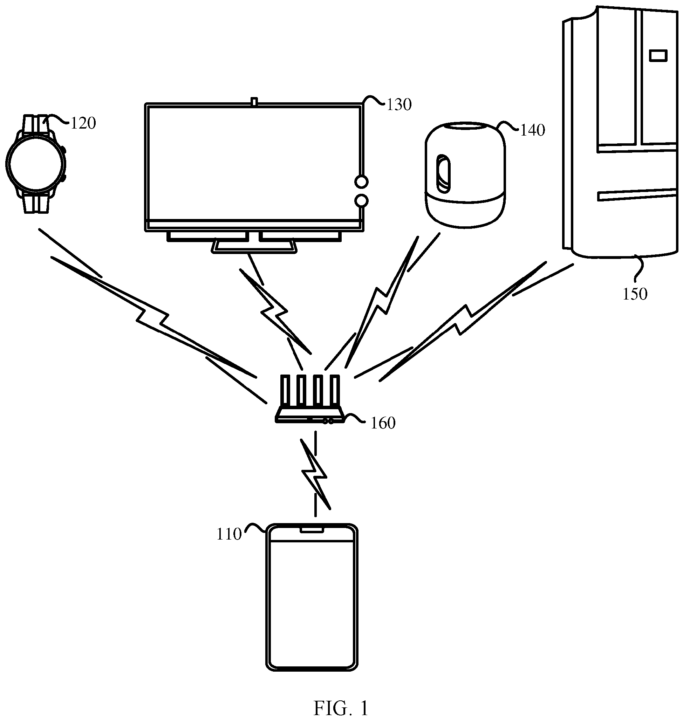

For example, FIG. 1 is a schematic diagram of an implementation scenario of a distributed operating system according to an embodiment of this application. As shown in FIG. 1, in a possible implementation scenario, the distributed operating system may include a mobile phone 110, a watch 120, a smart screen 130, a speaker 140, and a refrigerator 150. The mobile phone 110 establishes a local area network-based connection with the watch 120, the smart screen 130, the speaker 140, and the refrigerator 150 by using a router 160.

In the scenario shown in FIG. 1, the mobile phone 110 may be used as a first IoT device, and the watch 120, the smart screen 130, the speaker 140, and the refrigerator 150 may be separately used as second IoT devices.

In this embodiment of this application, the first IoT device may include a distributed application installation package. The distributed application installation package may include one or more meta-capability deployment packages and attribute information of each meta-capability deployment package. Each meta-capability deployment package can implement a corresponding function. In a possible implementation, for example, each meta-capability deployment package may be designed to implement an independent function. Each meta-capability deployment package may include a configuration list corresponding to the meta-capability deployment package, and a dynamic library, a resource file, and meta-capability service code that are used to implement the function of the meta-capability deployment package. In a possible implementation, each meta-capability deployment package may include one or more code-level installation sub-packages.

For example, the distributed application installation package may be an installation package of social software. The installation package of the social software may include a deployment package of a text chat capability, a deployment package of a video call capability, a deployment package of an audio call capability, a deployment package of a shopping capability, and another meta-capability deployment package. The deployment package of the text chat capability may implement a text chat function. The deployment package of the video call capability may implement a video call function. The deployment package of the audio call capability may implement an audio call function. The deployment package of the shopping capability may implement a shopping function.

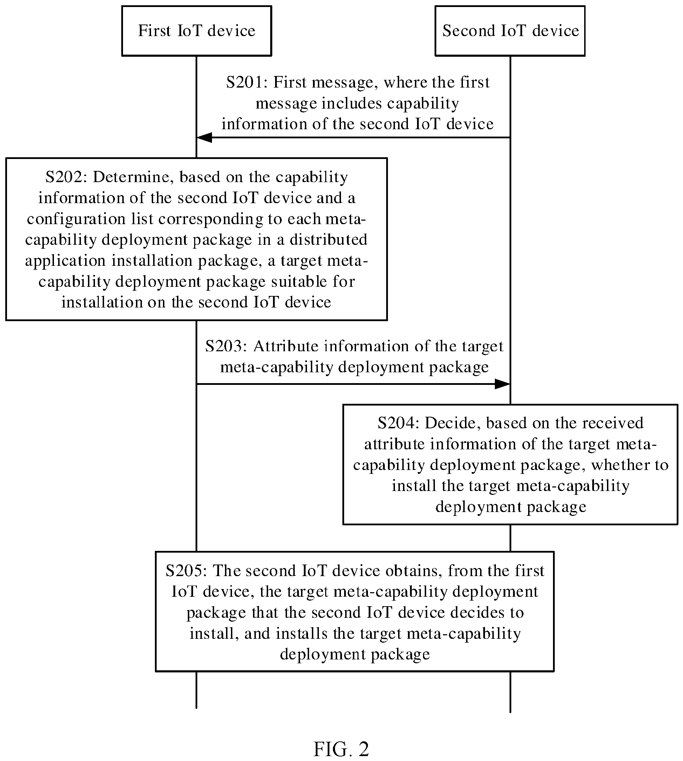

FIG. 2 is a schematic flowchart of an application deployment method according to an embodiment of this application. As shown in FIG. 2, the method may include S201 to S205.

S201: A second IoT device sends a first message to a first IoT device, where the first message includes capability information of the second IoT device.

In some embodiments, when accessing a distributed network (for example, the foregoing local area network) in which the first IoT device is located, the second IoT device may actively send the first message to the first IoT device.

For example, each IoT device in a distributed operating system may include one distributed network module. IoT devices accessing the distributed network may synchronize data and information based on respective distributed network modules. When the second IoT device accesses the distributed network in which the first IoT device is located, the second IoT device learns, by using its own distributed network module, that the first IoT device includes a distributed application installation package, so that the second IoT device may actively send the first message to the first IoT device. The distributed network module may be an independent chip, or a software module integrated into a processor in an IoT device.

Optionally, a case in which the second IoT device accesses the distributed network in which the first IoT device is located may include: The second IoT device accesses, for the first time, the distributed network in which the first IoT device is located, and/or the second IoT device accesses, again after being disconnected from the distributed network in which the first IoT device is located, the distributed network in which the first IoT device is located. For example, after being powered down or powered off, the second IoT device may be disconnected from the distributed network in which the first IoT device is located. Then, when the second IoT device is powered up or powered on again, the second IoT device may send the first message to the first IoT device.

In some other embodiments, when the second IoT device accesses the distributed network in which the first IoT device is located, the first IoT device may send a query request message to the second IoT device. The second IoT device may return the first message to the first IoT device after receiving the query request message.

In still some other embodiments, the first IoT device may provide a display interface. The display interface may include device identifiers (for example, device names) of one or more second IoT devices that are connected to the first IoT device through the distributed network. A user may select, on a display interface corresponding to the distributed application installation package, second IoT devices with which the first IoT device performs collaborative application deployment. The first IoT device may send, in response to the selection operation of the user, the query request message to the second IoT device selected by the user. The second IoT device selected by the user may return the first message to the first IoT device after receiving the query request message. A display interface that includes device identifiers of one or more second IoT devices connected to the first IoT device through the distributed network may be referred to as a first interface. An operation by which the user may select, on the display interface, second IoT devices with which the first IoT device performs collaborative application deployment may be referred to as a first operation.

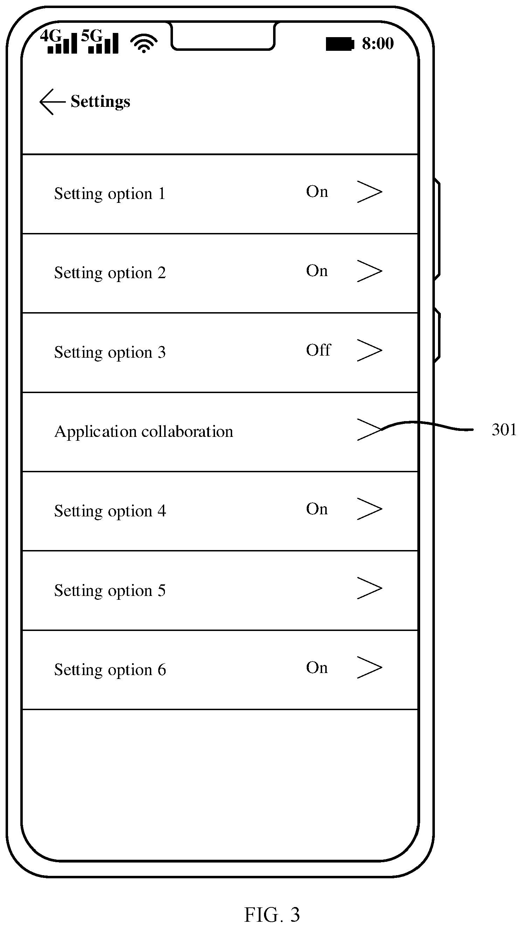

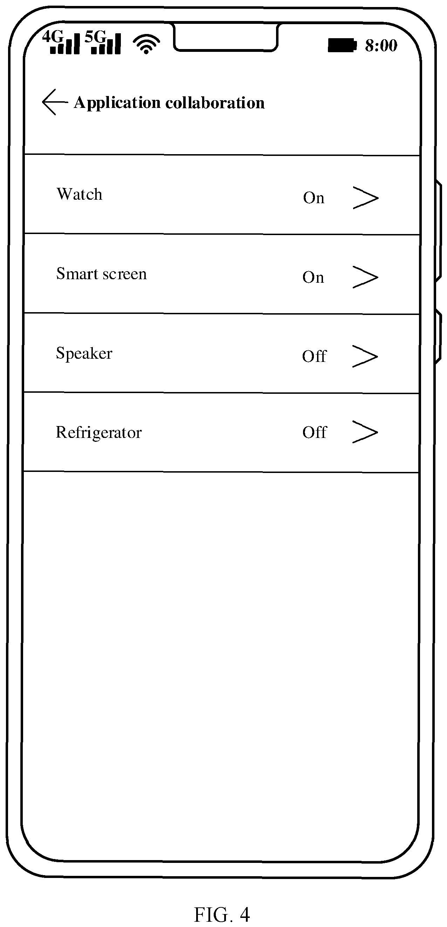

For example, the implementation scenario of the distributed operating system shown in FIG. 1 is used as an example. The first IoT device is a mobile phone 110. The second IoT device is a watch 120, a smart screen 130, a speaker 140, or a refrigerator 150. FIG. 3 is a schematic diagram of a setting interface of the mobile phone 110 according to an embodiment of this application. FIG. 4 is a schematic diagram of an application collaboration interface of the mobile phone 110 according to an embodiment of this application. As shown in FIG. 3, the setting interface of the mobile phone 110 may include an application collaboration button 301 (or a device collaboration button) and other setting options (for example, a setting option 1 to a setting option 6). When a user taps the application collaboration button 301, the mobile phone may display, in response to the operation of tapping the application collaboration button 301 by the user, an application collaboration interface shown in FIG. 4. As shown in FIG. 4, the application collaboration interface may include a name "Watch" of the watch 120, a name "Smart screen" of the smart screen 130, a name "Speaker" of the speaker 140, and a name "Refrigerator" of the refrigerator 150. There is also an on/off button behind each device name. The user may tap the on/off button behind each device name, to trigger the mobile phone 110 to enable or disable an application collaboration function for the device. When the user taps an on/off button behind a device name, and the mobile phone 110 is triggered to enable an application collaboration function for the device, a status of the on/off button behind the device name is switched from off to on. The device whose on/off button is switched to the on state is a second IoT device selected by the user. The mobile phone 110 may send a query request message to the device in response to the operation by which the user switches the status of the on/off button behind the device name from off to on. For example, in FIG. 4, second IoT devices selected by the user are the watch 120 and the smart screen 130. The mobile phone 110 may separately send query request messages to the watch 120 and the smart screen 130. After receiving the query request messages, the watch 120 and the smart screen 130 may return first messages to the mobile phone 110. It may be understood that the first message returned by the watch 120 includes capability information of the watch 120, and the first message returned by the smart screen 130 includes capability information of the smart screen 130.

It should be understood that the implementations shown in FIG. 3 and FIG. 4 are merely examples for description. In this embodiment of this application, there is no limitation on a specific manner in which the first IoT device provides a display interface for the user to select second IoT devices with which the first IoT device performs collaborative application deployment. For example, the display interface provided by the first IoT device may further include device identifiers (for example, device names, device models, and the like) of one or more second IoT devices that are connected to the first IoT device through the distributed network. The user may directly tap one or more of the device identifiers on the display interface. The first IoT device may send, in response to the operation of tapping the one or more device identifiers by the user, the query request message to second IoT devices that correspond to the device identifiers tapped by the user.

It should be noted that, in this embodiment of this application, a trigger condition for sending the first message to the first IoT device by the second IoT device is not limited to the several types described in the foregoing embodiments. The trigger condition for sending the first message to the first IoT device by the second IoT device is not limited in this application, either. For example, S201 may also be triggered by "touch" between the second IoT device and the first IoT device. For example, the second IoT device and the first IoT device each may include a near field communication (near field communication, NFC) chip. When the second IoT device approaches the first IoT device, an NFC connection may be established between the second IoT device and the first IoT device, to trigger the procedure described in S201. For another example, the second IoT device may actively send the first message to the first IoT device after going online for the first time or after going online again. A role of the first IoT device may be determined by each IoT device in the local area network based on an election rule.

The first message sent to the first IoT device by the second IoT device may be used to query, from the first IoT device, a meta-capability deployment package suitable for installation on the second IoT device. The first IoT device may perform S202 and S203 after receiving the first message.

S202: The first IoT device determines, based on the capability information of the second IoT device and a configuration list corresponding to each meta-capability deployment package in a distributed application installation package, a target meta-capability deployment package suitable for installation on the second IoT device.

For example, the distributed application installation package may be an installation package of a first application.

S203: The first IoT device sends attribute information of the target meta-capability deployment package to the second IoT device.

Correspondingly, the second IoT device receives the attribute information of the target meta-capability deployment package from the first IoT device.

For example, the attribute information of each meta-capability deployment package may include at least attributes such as a meta-capability name, version information, a meta-capability type, a size of the meta-capability deployment package (namely, storage space occupied by the meta-capability deployment package), a quantity of times that the meta-capability deployment package is used on the first IoT device, and permission required by the meta-capability deployment package.

S204: The second IoT device decides, based on the received attribute information of the target meta-capability deployment package, whether to install the target meta-capability deployment package.

For example, the second IoT device may receive attribute information of one or more target meta-capability deployment packages. In this case, the second IoT device may decide, based on the received attribute information of the target meta-capability deployment packages, to install one or more of the target meta-capability deployment packages.

S205: The second IoT device obtains, from the first IoT device, the target meta-capability deployment package that the second IoT device decides to install, and installs the target meta-capability deployment package.

For example, when deciding to install a target meta-capability deployment package, the second IoT device may obtain the target meta-capability deployment package from the first IoT device and install the target meta-capability deployment package.

In this method, an application installation package in the first IoT device is split into one or more meta-capability deployment packages based on different dimensions. The first IoT device interacts with the second IoT device through the local area network, so that a corresponding meta-capability deployment package is deployed on the second IoT device, to support the second IoT device in implementing a corresponding function. This can not only greatly reduce storage resources occupied by the application installation package on the second IoT device, but also resolve application deployment problems of some second IoT devices that cannot be connected to the network.

With reference to the implementation scenario of the distributed operating system shown in FIG. 1, the following describes specific implementation of the procedure of the application deployment method shown in FIG. 2 by using an example in which the first IoT device is a mobile phone 110, the second IoT device is a watch 120, and the mobile phone 110 includes an installation package of a first social software application.

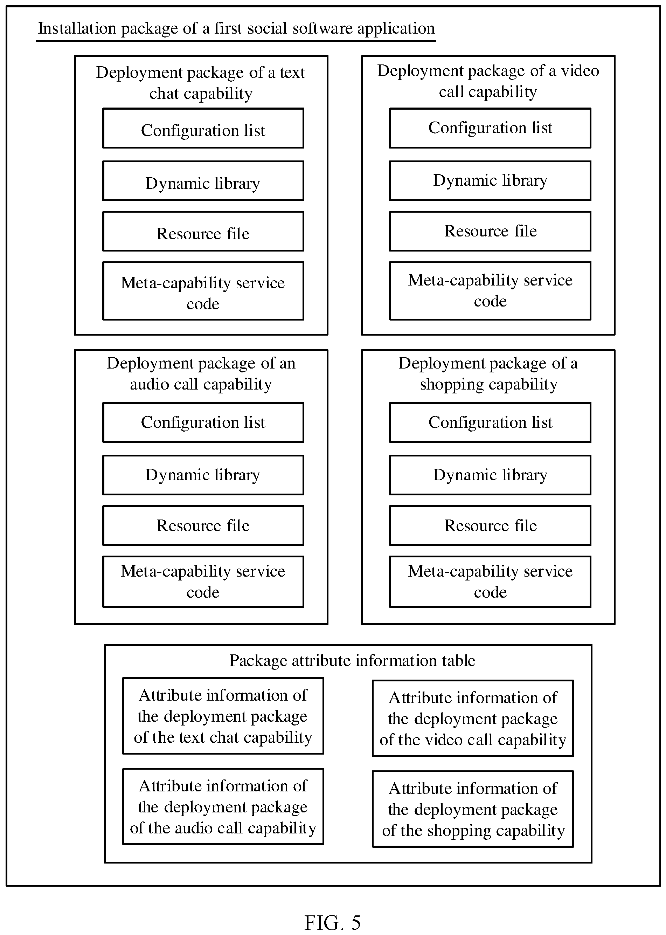

For example, FIG. 5 is a schematic diagram of composition of the installation package of the first social software application according to an embodiment of this application. As shown in FIG. 5, the installation package of the first social software application is a distributed application installation package, and may include: a deployment package of a text chat capability, a deployment package of a video call capability, a deployment package of an audio call capability, a deployment package of a shopping capability, and a package attribute information table (pack info). Each meta-capability deployment package may include a configuration list corresponding to the meta-capability deployment package, and a dynamic library, a resource file, and meta-capability service code that are used to implement the function of the meta-capability deployment package. The package attribute information table may include attribute information of the deployment package of the text chat capability, attribute information of the deployment package of the video call capability, attribute information of the deployment package of the audio call capability, and attribute information of the deployment package of the shopping capability.

For example, the configuration list corresponding to each meta-capability deployment package may be named as a "config.json". The dynamic library used to implement the function of the meta-capability deployment package may be named as "so". The resource file used to implement the function of the meta-capability deployment package may be named as "resource". A meta-capability service code dynamic library used to implement the function of the meta-capability deployment package may be named as "ability".

The deployment package of the text chat capability may implement a text chat function independently. The deployment package of the video call capability may implement a video call function independently. The deployment package of the audio call capability may implement an audio call function independently. The deployment package of the shopping capability may implement a shopping function independently. The text chat capability may be referred to as a core capability of the first social software application. The video call capability, the audio call capability, and the shopping capability may be referred to as additional capabilities of the first social software application.

The watch 120 may send a first message to the mobile phone 110, where the first message includes capability information of the watch 120. For details about a trigger condition for sending the first message to the mobile phone 110 by the watch 120, refer to the description in the foregoing embodiments.

After receiving the first message from the watch 120, the mobile phone 110 may determine, based on the capability information of the watch 120 included in the first message and the configuration list corresponding to each meta-capability deployment package in the installation package of the first social software application, a target meta-capability deployment package suitable for installation on the watch 120.

For example, the capability information of the watch 120 may include a device type, a device version, a device level, a device hardware capability, a central processing unit-application binary interface (central processing unit-application binary interface, CPU-ABI) type, and the like of the watch 120.

For example, in the capability information of the watch 120, the device type may be watch; the device version may be version 2.0 or version 3.0; the device level may be level 3; the device hardware capability may include capabilities of supporting landscape orientation, portrait orientation, sound play, Wi-Fi, Bluetooth, heartbeat detection, and the like by the watch 120; and the CPU-ABI type may include arm64-v8a, armeabi-v7a, X86, X86-64, mips, mips64, and the like.

Device levels may be obtained by classifying IoT devices based on factors such as whether resources of the IoT devices are rich, and whether the IoT devices can be connected to the network independently and/or can perform human-machine interaction. For example, the IoT devices may be classified into level 0 to level 5 based on capabilities of running memories (random access memories, RAMs), storage memories (read only memories, ROMs), CPUs, and the like of the IoT devices, which correspond to L0 to L5, respectively. A higher level of an IoT device indicates better performance. A level classification manner of the IoT devices is not limited herein.

For example, the configuration list corresponding to each meta-capability deployment package in the installation package of the first social software application may include: a device type suitable for the meta-capability deployment package, a minimum device version requirement corresponding to the device type suitable for the meta-capability deployment package, a minimum device level suitable for the meta-capability deployment package, a hardware capability requirement of the meta-capability deployment package, a CPU-ABI type supported by the meta-capability deployment package, a scenario type suitable for the meta-capability deployment package, and the like.

For example, the configuration list corresponding to the deployment package of the text chat capability may include: a device type suitable for the deployment package of the text chat capability, which is smart screen, watch, and refrigerator; a minimum device version requirement corresponding to the device type suitable for the deployment package of the text chat capability, which is version 2.0 for smart screen, version 3.0 for watch, and version 2.0 for refrigerator; a minimum device level suitable for the deployment package of the text chat capability, which is level 3; a hardware capability requirement of the deployment package of the text chat capability, which is a requirement for a screen, Wi-Fi, and an input; a CPU-ABI type supported by the deployment package of the text chat capability, which is architecture arm64 and arm32; and a scenario type suitable for the deployment package of the text chat capability, which is chat scenario.

The configuration list corresponding to the deployment package of the video call capability may include: a device type suitable for the deployment package of the video call capability, which is smart screen and watch; a minimum device version requirement corresponding to the device type suitable for the deployment package of the video call capability, which is version 2.0 for smart screen, and version 3.0 for watch; a minimum device level suitable for the deployment package of the video call capability, which is level 4; a hardware capability requirement of the deployment package of the video call capability, which is a requirement for a screen, a microphone, and Wi-Fi; a CPU-ABI type supported by the deployment package of the video call capability, which is architecture arm64 and arm32; and a scenario type suitable for the deployment package of the video call capability, which is video call scenario.

A configuration list corresponding to a deployment package of a voice call capability may include: a device type suitable for the deployment package of the voice call capability, which is smart screen, watch, and speaker; a minimum device version requirement corresponding to the device type suitable for the deployment package of the voice call capability, which is version 2.0 for smart screen, version 3.0 for watch, and version 1.0 for speaker; a minimum device level suitable for the deployment package of the voice call capability, which is level 4; a hardware capability requirement of the deployment package of the voice call capability, which is a requirement for a microphone and Wi-Fi; a CPU-ABI type supported by the deployment package of the voice call capability, which is architecture arm64 and arm32; and a scenario type suitable for the deployment package of the voice call capability, which is voice call scenario.

The configuration list corresponding to the deployment package of the shopping capability may include: a device type suitable for the deployment package of the shopping capability, which is smart screen, watch, and refrigerator; a minimum device version requirement corresponding to the device type suitable for the deployment package of the shopping capability, which is version 2.0 for smart screen, version 3.0 for watch, and version 1.0 for refrigerator; a minimum device level suitable for the deployment package of the shopping capability, which is level 3; a hardware capability requirement of the deployment package of the shopping capability, which is a requirement for a microphone and Wi-Fi; a CPU-ABI type supported by the deployment package of the shopping capability, which is architecture arm64 and arm32; and a scenario type suitable for the deployment package of the shopping capability, which is shopping scenario.

It should be noted that, the foregoing description of the capability information of the watch 120 and the configuration lists corresponding to the meta-capability deployment packages is merely an example for description and is not intended for limitation.

In some embodiments, the capability information of the watch 120 may include one or more of the foregoing listed types of capability information, and may alternatively include more types of capability information. The configuration list corresponding to the meta-capability deployment package may also include one or more of the types of information included in the foregoing listed configuration lists, or alternatively include more types of information.

In addition, in some implementations, there may be one or more scenario types suitable for some meta-capability deployment packages. When there is a plurality of scenario types suitable for a meta-capability deployment package, a configuration list corresponding to the meta-capability deployment package includes the plurality of scenario types suitable for the meta-capability deployment package.

Optionally, each meta-capability deployment package may further include identification information of the meta-capability deployment package, for example, a name of the meta-capability deployment package.

In a possible design, the configuration list corresponding to each meta-capability deployment package in the installation package of the first social software application may include a plurality of fields. These fields may be used to identify: the device type suitable for the meta-capability deployment package, the minimum device version requirement corresponding to the device type suitable for the meta-capability deployment package, the minimum device level suitable for the meta-capability deployment package, the hardware capability requirement of the meta-capability deployment package, the CPU-ABI type supported by the meta-capability deployment package, the scenario type suitable for the meta-capability deployment package, and the like.

For example, the configuration list corresponding to each meta-capability deployment package may include: a name field, a deviceTypes field, a deviceVersions field, a deviceLevel field, a reqCapabilities field, a supportAbi field, and a moduleType field. The name field may be used to identify the name of the meta-capability deployment package; the deviceTypes field may be used to identify the device type suitable for the meta-capability deployment package; the deviceVersions field may be used to identify the minimum device version requirement corresponding to the device type suitable for the meta-capability deployment package; the deviceLevel field may be used to identify the minimum device level suitable for the meta-capability deployment package; the reqCapabilities field may be used to identify the hardware capability requirement of the meta-capability deployment package; the supportAbi field may be used to identify the CPU-ABI type supported by the meta-capability deployment package; and the moduleType field may be used to identify the scenario type suitable for the meta-capability deployment package.

Based on the capability information of the watch 120 and the configuration list corresponding to each meta-capability deployment package in the installation package of the first social software application, the step that the mobile phone 110 determines, a target meta-capability deployment package suitable for installation on the watch 120 may include:
The mobile phone 110 queries, based on the capability information of the watch 120, the configuration list corresponding to each meta-capability deployment package in the deployment package of the text chat capability, the deployment package of the video call capability, the deployment package of the audio call capability, and the deployment package of the shopping capability, to determine meta-capability deployment packages that can be satisfied by a capability of the watch 120. Then, the mobile phone 110 may determine, as the target meta-capability deployment package suitable for installation on the watch 120, a meta-capability deployment package whose requirement can be satisfied by the capability of the watch 120.

For example, the mobile phone 110 may query, based on the capability information of the watch 120, the configuration list corresponding to the deployment package of the text chat capability, and determine whether the device type of the watch 120 is the device type suitable for the deployment package of the text chat capability, whether the device version of the watch 120 meets (is higher than or equal to) the minimum device version requirement corresponding to the device type suitable for the deployment package of the text chat capability, whether the device level of the watch 120 meets the minimum device level requirement corresponding to the device type suitable for the deployment package of the text chat capability, whether the device hardware capability of the watch 120 meets the hardware capability requirement of the deployment package of the text chat capability, whether the CPU-ABI type of the watch 120 meets the CPU-ABI type supported by the deployment package of the text chat capability, and the like. When all the foregoing conditions are met, the mobile phone 110 may determine that the deployment package of the text chat capability is the target meta-capability deployment package suitable for installation on the watch 120.

Similarly, the mobile phone 110 may separately determine whether the deployment package of the video call capability, the deployment package of the audio call capability, and the deployment package of the shopping capability are target meta-capability deployment packages suitable for installation on the watch 120.

It may be understood that the mobile phone 110 finally determines that there may be one or more target meta-capability deployment packages suitable for installation on the watch 120.

After determining the target meta-capability deployment package suitable for installation on the watch 120, the mobile phone 110 may send the attribute information of the target meta-capability deployment package to the watch 120. The watch 120 may decide, based on the received attribute information of the target meta-capability deployment package, whether to install the target meta-capability deployment package.

Optionally, when the mobile phone 110 determines that there are a plurality of target meta-capability deployment packages suitable for installation on the watch 120, the mobile phone 110 may pack attribute information of the plurality of target meta-capability deployment packages and send the packed attribute information to the watch 120.

For example, the attribute information of each meta-capability deployment package may include at least attributes such as a meta-capability name, version information, a meta-capability type, a size of the meta-capability deployment package (namely, storage space occupied by the meta-capability deployment package), a quantity of times that the meta-capability deployment package is used on the mobile phone 110 (namely, the first IoT device), and permission required by the meta-capability deployment package.

In some embodiments, a decision condition may be preset in the watch 120. The watch 120 may determine, based on the received attribute information of the target meta-capability deployment package and the preset decision condition, whether to install the target meta-capability deployment package.

For example, the decision condition may include one or more of the following: remaining storage space of the watch 120 is greater than a size of the target meta-capability deployment package, remaining power of the watch 120 is greater than a first threshold, the watch 120 is currently in a screen-off and charging state (an impact on a user is minimal when the watch 120 is in the screen-off and charging state), a quantity of times that the target meta-capability deployment package is used on the mobile phone 110 is greater than a second threshold, and permission required by the target meta-capability deployment package does not include sensitive permission (for example, photo obtaining permission, address book obtaining permission, and the like).

For any target meta-capability deployment package, when determining, based on the received attribute information of the target meta-capability deployment package and the preset decision condition, that the target meta-capability deployment package meets the preset decision condition, the watch 120 may determine to install the target meta-capability deployment package.

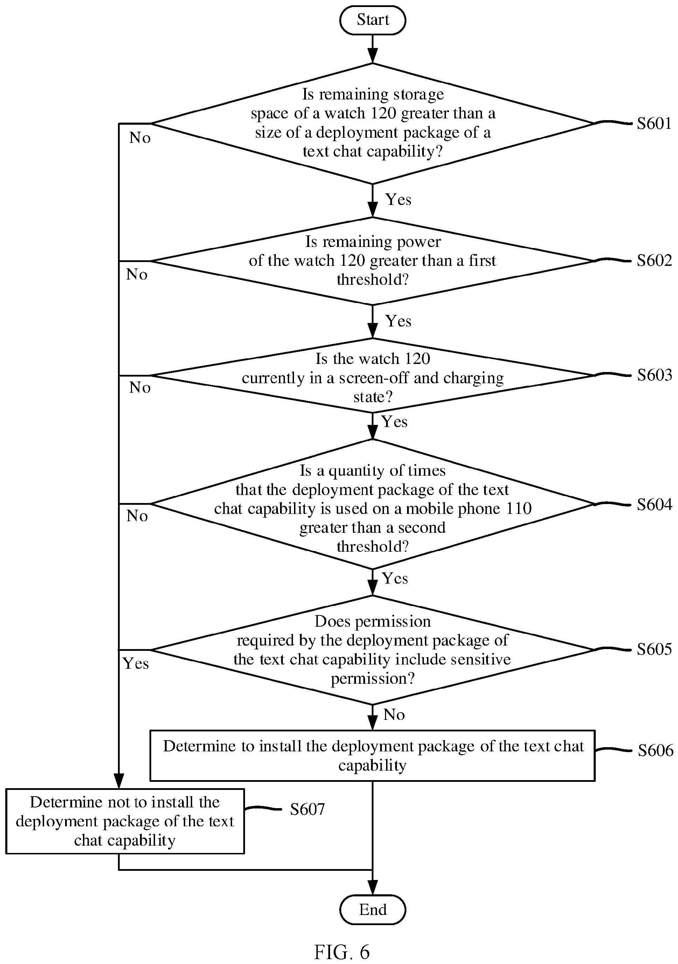

For example, the watch 120 receives the attribute information of the deployment package of the text chat capability. FIG. 6 is a schematic flowchart of deciding, by the watch 120, whether to install the deployment package of the text chat capability according to an embodiment of this application. As shown in FIG. 6, a procedure of deciding, by the watch 120 based on the attribute information of the deployment package of the text chat capability and the preset decision condition, whether to install the deployment package of the text chat capability may include S601 to S607.

S601: Determine whether the remaining storage space of the watch 120 is greater than the size of the deployment package of the text chat capability.

S602 is performed if the remaining storage space of the watch 120 is greater than the size of the deployment package of the text chat capability; or S607 is performed if the remaining storage space of the watch 120 is not greater than the size of the deployment package of the text chat capability.

S602: Determine whether the remaining power of the watch 120 is greater than the first threshold.

For example, the first threshold may be 30%, 50%, 60%, or the like. A value of the first threshold is not limited herein.

Perform S603 if the remaining power of the watch 120 is greater than the first threshold; or perform S607 if the remaining power of the watch 120 is not greater than the first threshold.

S603: Determine whether the watch 120 is currently in the screen-off and charging state.

Perform S604 if the watch 120 is currently in the screen-off and charging state; or perform S607 if the watch 120 is not currently in the screen-off and charging state.

S604: Determine whether a quantity of times that the deployment package of the text chat capability is used on the mobile phone 110 is greater than the second threshold.

For example, the second threshold may be 5, 10, 18, or the like. A value of the second threshold is not limited herein.

Perform S605 if the quantity of times that the deployment package of the text chat capability is used on the mobile phone 110 is greater than the second threshold; or perform S607 if the quantity of times that the deployment package of the text chat capability is used on the mobile phone 110 is not greater than the second threshold.

S605: Determine whether permission required by the deployment package of the text chat capability includes the sensitive permission.

Perform S607 if the permission required by the deployment package of the text chat capability includes the sensitive permission; or perform S606 if the permission required by the deployment package of the text chat capability does not include the sensitive permission.

S606: Determine to install the deployment package of the text chat capability.

S607: Determine not to install the deployment package of the text chat capability.

It should be noted that the foregoing provided decision conditions are all examples for description. Specific types and a specific quantity of decision conditions preset in the watch 120 are not limited in this application. For example, the preset decision condition in the watch 120 may include only that the remaining storage space of the watch 120 is greater than the size of the target meta-capability deployment package. For another example, the preset decision condition in the watch 120 may further include another decision condition.

In other words, in this embodiment of this application, the preset decision condition in the watch 120 may include at least one condition. Optionally, the decision condition may be set based on a plurality of different dimensions such as security (for example, user privacy), user experience, and an installation success rate.

In some other embodiments, the user may also set a decision condition on the watch 120. The watch 120 may determine, based on the decision condition set by the user, whether to install the target meta-capability deployment package. For example, based on a specific implementation scenario of the distributed operating system, a preference condition of the user, and the like, the user may preset, in the watch 120 in advance, a type of a meta-capability deployment package that triggers automatic download and installation, a value of the first threshold, a value of the second threshold, permission required by the meta-capability deployment package, and the like. The watch 120 may modify the decision condition in response to a setting operation for the decision condition. The watch 120 may determine, based on the received attribute information of the target meta-capability deployment package and the decision condition set by the user, whether to install the target meta-capability deployment package. A specific determining manner is the same as or similar to that in the foregoing embodiment. Details are not described again.

Optionally, the user may also set a decision condition of the watch 120 on the mobile phone 110. The mobile phone 110 may configure, for the watch 120, the decision condition of the watch 120 that is set by the user. A manner in which the user sets the decision condition of the watch 120 is not limited herein.

Optionally, in some implementations, when setting decision conditions, the user may further set different weights for different decision conditions. When determining, based on the received attribute information of the target meta-capability deployment package and the decision conditions set by the user, whether to install the target meta-capability deployment package, the watch 120 may comprehensively calculate, with reference to the weights corresponding to the decision conditions, whether to install the target meta-capability deployment package.

In still some other embodiments, when the watch 120 includes a display interface capable of interacting with the user, an installation prompt of the target meta-capability deployment package may pop up on the display interface after the watch 120 receives the attribute information of the target meta-capability deployment package. The user may select, on the display interface, whether to install the target meta-capability deployment package. In response to an operation of selecting, by the user, to install the target meta-capability deployment package, the watch 120 may determine to install the target meta-capability deployment package. Alternatively, in response to an operation of selecting, by the user, not to install the target meta-capability deployment package, the watch 120 may determine not to install the target meta-capability deployment package. The display interface that is of the watch 120 and on which the installation prompt of the target meta-capability deployment package pops up may be referred to as a third interface. The operation of selecting, by the user on the display interface, to install the target meta-capability deployment package may be referred to as a third operation.

When the watch 120 does not include the display interface capable of interacting with the user, the installation prompt of the target meta-capability deployment package may pop up through a display interface of the mobile phone 110 after the watch 120 receives the attribute information of the target meta-capability deployment package. For example, the watch 120 may send an indication message to the mobile phone 110, to indicate the mobile phone 110 to make the installation prompt of the target meta-capability deployment package pop up on the display interface. The user may select, on the display interface of the mobile phone 110, whether to install the target meta-capability deployment package. In response to an operation of selecting, by the user, to install the target meta-capability deployment package, the mobile phone 110 may notify the watch 120 that the user selects to install the target meta-capability deployment package (for example, may also send an indication message). Alternatively, in response to an operation of selecting, by the user, not to install the target meta-capability deployment package, the mobile phone 110 may notify the watch 120 that the user selects not to install the target meta-capability deployment package. Therefore, the watch 120 may determine, based on a notification result of the mobile phone 110, whether to install the target meta-capability deployment package. The display interface that is of the mobile phone 110 and on which the installation prompt of the target meta-capability deployment package pops up may be referred to as a second interface. The operation of selecting, by the user on the display interface, to install the target meta-capability deployment package may be referred to as a second operation. The mobile phone 110 may notify, by using a second message, the watch 120 that the user selects to install the target meta-capability deployment package.

In yet some other embodiments, when receiving the attribute information of the target meta-capability deployment package, the watch 120 may alternatively first determine whether the remaining storage space of the watch 120 is greater than the size of the target meta-capability deployment package. When the remaining storage space of the watch 120 is greater than the size of the target meta-capability deployment package, the installation prompt of the target meta-capability deployment package pops up on the display interface of the watch 120 (or through the display interface of the mobile phone 110).

It may be understood that the watch 120 may receive attribute information of one or more target meta-capability deployment packages. When the watch 120 receives attribute information of a plurality of target meta-capability deployment packages, the watch 120 may separately determine, in the manner described in the foregoing embodiments, whether to install the target meta-capability deployment packages.

Optionally, when the watch 120 receives attribute information of a target meta-capability deployment package, if the target meta-capability deployment package already exists in the watch 120, the watch 120 may determine whether the version of the target meta-capability deployment package in the mobile phone 110 is higher than the version of the target meta-capability deployment package that has been installed locally (that is, on the watch 120). When the version of the target meta-capability deployment package in the mobile phone 110 is higher than the version of the locally installed target meta-capability deployment package, the watch 120 may also decide to install the target meta-capability deployment package. When the version of the target meta-capability deployment package in the mobile phone 110 is not higher than the version of the locally installed target meta-capability deployment package, the watch 120 may decide not to install the target meta-capability deployment package.

In other words, in this embodiment of this application, a condition for the watch 120 to decide whether to install the target meta-capability deployment package may further include: When the target meta-capability deployment package has been installed locally on the watch 120, but the version of the target meta-capability deployment package in the mobile phone 110 is higher than the version of the locally installed target meta-capability deployment package.

After deciding, based on the received attribute information of the target meta-capability deployment package, the target meta-capability deployment package that needs to be installed, the watch 120 may obtain, from the mobile phone 110, the target meta-capability deployment package that the watch 120 decides to install, and install the target meta-capability deployment package.

It may be understood that, if the target meta-capability deployment package has been installed locally on the watch 120, but the version of the target meta-capability deployment package in the mobile phone 110 is higher than the version of the locally installed target meta-capability deployment package, when obtaining the target meta-capability deployment package from the mobile phone 110 and installing the target meta-capability deployment package, the watch 120 may actually update the locally installed target meta-capability deployment package.

The following describes a process in which the watch 120 obtains, from the mobile phone 110, the target meta-capability deployment package that the watch 120 decides to install, and installs the target meta-capability deployment package.

For example, after deciding the target meta-capability deployment package that needs to be installed, the watch 120 may send a download request message to the mobile phone 110, where the download request message may include identification information of the target meta-capability deployment package that the watch 120 decides to install. After receiving the download request message from the watch 120, the mobile phone 110 may extract a corresponding target meta-capability deployment package from the installation package of the first social software application based on the identification information of the target meta-capability deployment package that the watch 120 decides to install, and send the corresponding target meta-capability deployment package to the watch 120. After receiving the target meta-capability deployment package, the watch 120 may install the target meta-capability deployment package.

For example, assuming that target meta-capability deployment packages that the watch 120 decides to install include: the deployment package of the audio call capability and the deployment package of the shopping capability, the watch 120 may send a download request message to the mobile phone 110, where the download request message may include identification information of the deployment package of the audio call capability and identification information of the deployment package of the shopping capability. After receiving the download request message from the watch 120, the mobile phone 110 may extract (copy) the deployment package of the audio call capability and the deployment package of the shopping capability from the installation package of the first social software application based on the identification information of the deployment package of the audio call capability and the identification information of the deployment package of the shopping capability, and send the deployment package of the audio call capability and the deployment package of the shopping capability to the watch 120. After receiving the deployment package of the audio call capability and the deployment package of the shopping capability, the watch 120 may install the deployment package of the audio call capability and the deployment package of the shopping capability.

In some embodiments, the identification information of the target meta-capability deployment package that the watch 120 decides to install may be a name or a meta-capability name of the target meta-capability deployment package. For example, the watch 120 may extract a meta-capability name corresponding to the target meta-capability deployment package from the received attribute information of the target meta-capability deployment package, and use the meta-capability name as the identification information of the target meta-capability deployment package.

In some other embodiments, after deciding the target meta-capability deployment package that needs to be installed, the watch 120 may alternatively pack all or some of attribute information of the target meta-capability deployment package that needs to be installed, and send the packed attribute information to the mobile phone 110. The attribute information that is of the target meta-capability deployment package and that is sent to the mobile phone 110 by the watch 120 may be used as the identification information of the target meta-capability deployment package, and indicate, to the mobile phone 110, target meta-capability deployment packages that the watch 120 decides to install.

Optionally, when there are a plurality of target meta-capability deployment packages that the watch 120 decides to install, the mobile phone 110 may pack the plurality of target meta-capability deployment packages together, and send the packed target meta-capability deployment packages to the watch 120.

Optionally, to ensure security, when sending the target meta-capability deployment package to the watch 120, the mobile phone 110 may extract signature information of the installation package of the first social software application, and distribute the signature information together with the target meta-capability deployment package to the watch 120.

In still some other embodiments, the step of deciding whether to install the target meta-capability deployment package on the watch 120 in the foregoing embodiments may also be implemented on the mobile phone 110. For example, the foregoing decision condition may be preset in the mobile phone 110. After determining the target meta-capability deployment package suitable for installation on the watch 120, the mobile phone 110 may not send the attribute information of the target meta-capability deployment package to the watch 120. The mobile phone 110 may obtain information such as the remaining storage space of the watch 120, the remaining power of the watch 120, whether the watch 120 is currently in the screen-off and charging state, and the like, and decide, based on the obtained information of the watch 120 and the attribute information of the target meta-capability deployment package, whether to install the target meta-capability deployment package. After the mobile phone 110 decides target meta-capability deployment packages that need to be installed on the watch 120, the mobile phone 110 may actively send these target meta-capability deployment packages to the watch 120. This is not limited in this application.

Optionally, when the step of deciding whether to install the target meta-capability deployment packages on the watch 120 can be implemented on the mobile phone 110, after deciding the target meta-capability deployment packages that need to be installed on the watch 120, the mobile phone 110 may further display, to the user through a display interface, the identification information of the target meta-capability deployment packages that need to be installed on the watch 120. The user may click identification information of one or more of the target meta-capability deployment packages on the display interface, to trigger the mobile phone 110 to send, to the watch 120 for installation, the target meta-capability deployment packages corresponding to the identification information selected by the user. In other words, in this embodiment, the user may select target meta-capability deployment packages to be installed on the watch 110. The display interface that is of the mobile phone and on which the identification information of the target meta-capability deployment package that needs to be installed on the watch 120 is displayed to the user may be referred to as the second interface. The identification information that is of the target meta-capability deployment package and that is displayed on the second interface may be referred to as the installation prompt, and is used to prompt the user whether to install the target meta-capability deployment package corresponding to the identification information. The operation that the user clicks the identification information of the one or more target meta-capability deployment packages on the display interface may be referred to as the second operation. After receiving the second operation, the mobile phone 110 may send, by using the second message to the watch 120 for installation, the target meta-capability deployment package corresponding to the identification information selected by the user.

In the foregoing embodiments, the implementation scenario of the distributed operating system shown in FIG. 1 is used as an example to describe, with reference to the process of interaction between the mobile phone 110 (the first IoT device) and the watch 120 (the second IoT device), the application deployment method provided in embodiments of this application. For a process of interaction between the mobile phone 110 and the smart screen 130, or between the mobile phone 110 and the speaker 140, or between the mobile phone 110 and the refrigerator 150, refer to the foregoing process of interaction between the mobile phone 110 and the watch 120. Details are not described herein again.

In addition, in this embodiment of this application, the first IoT device may include one or more distributed application deployment packages (not limited to a deployment package of the first social software application). When the first IoT device includes a plurality of distributed application deployment packages, for each distributed application deployment package, the first IoT device may distribute a meta-capability deployment package in the distributed application deployment package to the second IoT device in a manner similar to that in the foregoing embodiments. There may be a plurality of second IoT devices. In this case, the first IoT device may separately distribute, to the plurality of second IoT devices, a plurality of meta-capability deployment packages included in the distributed application deployment package, to implement collaboration between the plurality of second IoT devices in some scenarios. When finding, based on the capability information sent by the second IoT device, a plurality of second IoT devices that have matched capabilities and on which a meta-capability deployment package can be installed, the first IoT device may automatically decide or prompt the user to determine one or more second IoT devices on which the meta-capability deployment package needs to be installed. Neither an implementation scenario of a distributed operating system to which the application deployment method can be applied nor a quantity and types of distributed application deployment packages included in the first IoT device are limited in this embodiment of this application.

For example, in some implementation scenarios, the distributed operating system may include a mobile phone, a large screen, a speaker, and a handwriting pad. The mobile phone is separately connected to the large screen, the speaker, and the handwriting pad. An online education application of a manufacturer A is pre-installed on the mobile phone. The online education application includes a video-capability deployment package, an interaction-capability deployment package, and an audio-capability deployment package. In embodiments of this application, the mobile phone may install the video-capability deployment package on the large screen, install the interaction-capability deployment package on the handwriting pad, and install the audio-capability deployment package on the speaker. The large screen, the speaker, and the handwriting pad can collaboratively provide functions of the online education application for the user based on capability modules that are respectively installed on the large screen, the speaker, and the handwriting pad.

For another example, in some other implementation scenarios, the distributed operating system may include a mobile phone, a large screen, and AR glasses. According to the application deployment method in embodiments of this application, the large screen may provide a live broadcast function for the user, and the AR glasses may provide a try-on function for the user. Alternatively, the distributed operating system may include an in-vehicle infotainment and a mobile phone. According to the application deployment method in this embodiment of this application, the in-vehicle infotainment may provide a navigation function for the user, and the mobile phone may provide a navigation sound play function for the user. Alternatively, the distributed operating system may include a mobile phone, a watch, and a treadmill. According to the application deployment method in this embodiment of this application, the watch may record running duration and an exercise habit of the user, and the treadmill may automatically set a running speed and the like.

In the application deployment method provided in this embodiment of this application, a corresponding function can be implemented by installing only the meta-capability deployment package on the second IoT device, so that storage space occupied by an application deployment package on the second IoT device can be greatly reduced. A manner in which the first IoT device distributes the meta-capability deployment package to the second IoT device also greatly simplifies an application deployment procedure. This makes a deployment manner simpler, faster, and more flexible. For example, the IoT device can implement distributed deployment, such as installation, update, and replacement, of an application in the local area network anytime and anywhere based on scenarios, and can even make the user insensitive to an installation process.

In addition, the distributed application deployment package on the first IoT device includes a plurality of meta-capability deployment packages, and some of the meta-capability deployment packages can be installed on different second IoT devices. Therefore, the application deployment method can further effectively improve a reuse rate of an application installation package, reduce occupied memory (storage) space on the first IoT device, and implement one-time download and multi-terminal deployment. For example, in the installation package of the first social software application shown in FIG. 5, the deployment package of the shopping capability may be installed on not only the refrigerator but also the smart screen.

Optionally, in this embodiment of this application, for each type of distributed application installation package, the distributed operating system needs to store only one copy of the distributed application installation package on the first IoT device.

It should be noted that the distributed application deployment package on the first IoT device needs to be downloaded from a server by the first IoT device. However, another second IoT device needs to only obtain a corresponding meta-capability deployment package from the first IoT device for installation. Therefore, download pressure on a server side can also be reduced.

Optionally, in yet some other embodiments of this application, the capability information of the second IoT device may be preset in the first IoT device, or the first IoT device may query the capability information of the second IoT device from the server (for example, a cloud). When the first IoT device detects a connection with the second IoT device, the first IoT device may automatically determine, based on the capability information of the second IoT device and the configuration list corresponding to each meta-capability deployment package in the distributed application installation package, the target meta-capability deployment package suitable for installation on the second IoT device. In other words, in the embodiments, the second IoT device may not need to send the first message to the first IoT device.

Optionally, the first IoT device and the second IoT device may separately start one or more services in their respective foundation (foundation) processes, to implement the process of interaction between the first IoT device and the second IoT device in embodiments of this application. An example in which the first IoT device and the second IoT device may separately start a service in their respective foundation processes is used below for description.

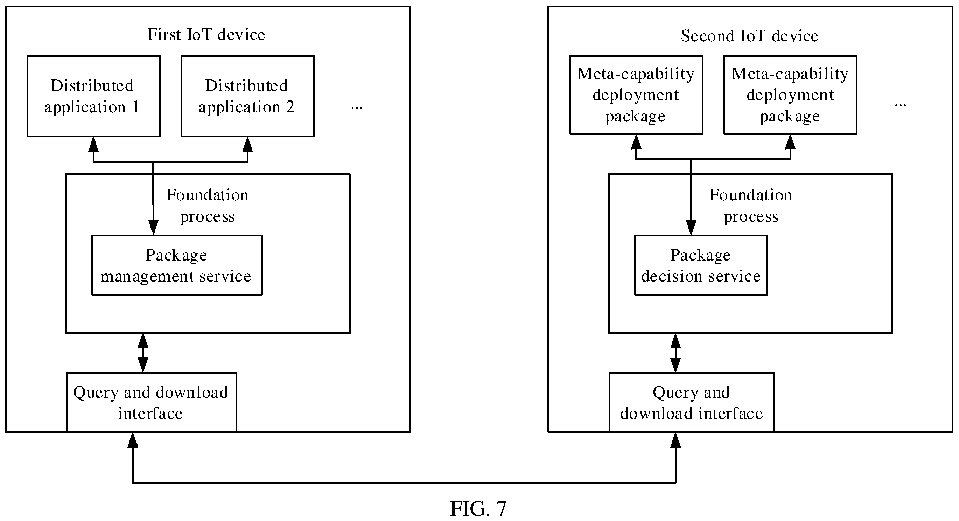

For example, FIG. 7 is a schematic diagram of an architecture of the first IoT device and the second IoT device according to an embodiment of this application. As shown in FIG. 7, the first IoT device may include applications, such as a distributed application 1, a distributed application 2, and the like, that are used to implement multi-device collaborative work in a distributed operating system. The first IoT device may start a package management service in the foundation process. The second IoT device may start a package decision service in the foundation process.

The first IoT device may implement the function in the foregoing embodiments by using the package management service. The second IoT device may implement the function in the foregoing embodiments by using the package decision service.

For example, the package management service may be used to implement the following functions: determining, based on the capability information of the second IoT device and the configuration list corresponding to each meta-capability deployment package in the distributed application installation package, the target meta-capability deployment package suitable for installation on the second IoT device; sending the attribute information of the target meta-capability deployment package to the second IoT device; and so on. The package decision service may be used to implement the following functions: sending the first message to the first IoT device; deciding, based on the received attribute information of the target meta-capability deployment package, whether to install the target meta-capability deployment package; obtaining, from the first IoT device, the target meta-capability deployment package that the second IoT device decides to install, and performing installation; and so on.

Optionally, still refer to FIG. 7. The first IoT device and the second IoT device each may include a query and download interface. The first IoT device and the second IoT device may interact with each other by using each other's query and download interfaces.

Optionally, the first IoT device and the second IoT device each may further decide a specific type of a respectively started service based on whether a distributed application is included. For example, when a distributed application 3 is installed on the second IoT device, the second IoT device may also start a package management service in the foundation process, and the first IoT device may also start a package decision service in the foundation process. The package management service started by the second IoT device and the package decision service started by the first IoT device may be used to cooperate in deploying a meta-capability deployment package in the distributed application 3 on the first IoT device. In other words, in this embodiment of this application, the two IoT devices each may determine a type of a respectively started service (for example, a package management service or a package decision service) based on a requirement of application deployment (for example, deployment from the first IoT device to the second IoT device, or deployment from the second IoT device to the first IoT device). This is not limited in this application.

In the foregoing embodiment, the application deployment method provided in embodiments of this application is described by using the following example: The first application included in the first IoT device may be divided into a plurality of capability modules (the capability modules may also be referred to as meta-capability modules, capability units, or the like), and each capability module includes one meta-capability deployment package and is configured to implement an independent function.

Optionally, in some other embodiments, some or all of the plurality of capability modules included in the first application each may alternatively include a plurality of meta-capability deployment packages. When a capability module includes a plurality of meta-capability deployment packages, the capability module may be configured to implement a plurality of corresponding functions.

For example, the distributed application installation package may be an installation package of social software. The installation package of the social software may include a deployment package of a text chat capability, a deployment package of a video call capability, a deployment package of an audio call capability, a deployment package of a shopping capability, and another meta-capability deployment package. The deployment package of the text chat capability, the deployment package of the video call capability, and the deployment package of the audio call capability may constitute a social capability module. The deployment package of the shopping capability may constitute an entertainment capability module and the like. A division manner of the capability module is not limited herein.

In this embodiment of this application, the first IoT device may determine, at a capability module level based on the capability information of the second IoT device, a target capability module (for example, a first target capability module) suitable for installation on the second device from the plurality of capability modules included in the first application, and send the first target capability module to the second IoT device. When the first target capability module includes one meta-capability deployment package, after installing the first target capability module, the second IoT device may implement a function corresponding to the first target capability module. When the first target capability module includes a plurality of meta-capability deployment packages, after installing the first target capability module, the second IoT device may implement a plurality of functions corresponding to the first target capability module.

Optionally, there may be one or more first target capability modules.

Similarly, the distributed operating system may further include a third IoT device (the third IoT device has the same device form as the second IoT device). The first IoT device may determine, at the capability module level based on capability information of the third IoT device, a target capability module (for example, a second target capability module) suitable for installation on a third device from the plurality of capability modules included in the first application, and send the second target capability module to the third IoT device. The second target capability module may include one meta-capability deployment package or a plurality of meta-capability deployment packages, and is configured to implement one or more functions.

Optionally, there may be one or more second target capability modules.

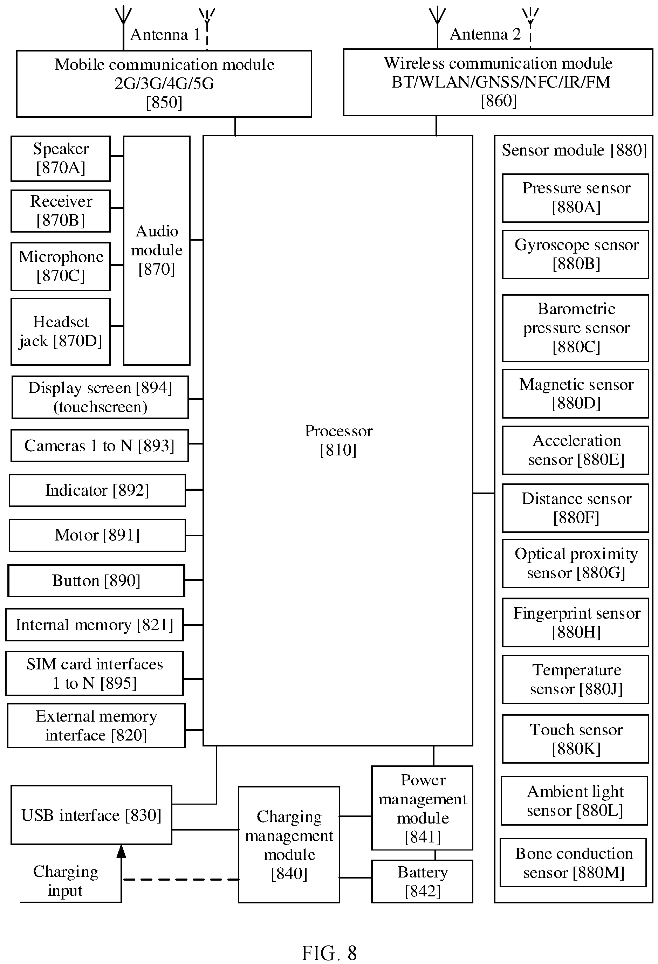

For example, the IoT device is a mobile phone. FIG. 8 is a schematic diagram of hardware composition of an IoT device according to an embodiment of this application.

As shown in FIG. 8, the mobile phone may include a processor 810, an external memory interface 820, an internal memory 821, a universal serial bus (universal serial bus, USB) interface 830, a charging management module 840, a power management module 841, a battery 842, an antenna 1, an antenna 2, a mobile communication module 850, a wireless communication module 860, an audio module 870, a speaker 870A, a receiver 870B, a microphone 870C, a headset jack 870D, a sensor module 880, a button 890, a motor 891, an indicator 892, a camera 893, a display screen 894, a subscriber identification module (subscriber identification module, SIM) card interface 895, and the like.

The processor 810 may include one or more processing units. For example, the processor 810 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the mobile phone. The controller may generate an operation control signal according to instruction operation code and a time sequence signal, to complete control of instruction reading and instruction execution.

The processor 810 may be further provided with a memory, configured to store instructions and data. In some embodiments, the memory in the processor 810 is a cache. The memory may store an instruction or data that has just been used or has been cyclically used by the processor 810. If the processor 810 needs to use the instruction or the data again, the processor 810 may directly invoke the instruction or the data from the memory. This avoids repeated access and reduces a waiting time of the processor 810, thereby improving system efficiency.

In some embodiments, the processor 810 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a SIM interface, a USB interface, and/or the like.

The external memory interface 820 may be configured to connect to an external memory card, for example, a micro SD card, to extend a storage capability of the mobile phone. The external storage card communicates with the processor 810 through the external memory interface 820, to implement a data storage function. For example, files such as pictures, music, and videos are stored in the external memory card.

The internal memory 821 may be configured to store computer executable program code. The executable program code includes instructions. The processor 810 runs the instructions stored in the internal memory 821, to perform various function applications of the mobile phone and data processing. For example, when the mobile phone is used as the first IoT device, the processor 810 may run the instructions stored in the internal memory 821, to perform various functions of the first IoT device in the application deployment method provided in this embodiment of this application.

The internal memory 821 may further include a program storage area and a data storage area. The program storage area may store an operating system, an application program (for example, a first social software application) required by at least one function, and the like. The data storage area may store data (for example, image data or a phone book) created when the mobile phone is used, and the like. In addition, the internal memory 821 may include a high-speed random access memory, or may include a non-volatile memory, for example, at least one magnetic disk storage device, a flash memory, a universal flash storage (universal flash storage, UFS), or the like.

The charging management module 840 is configured to receive a charging input from a charger. When charging the battery 842, the charging management module 840 may further supply power to the mobile phone by using the power management module 841. The power management module 841 is configured to connect the battery 842 and the charging management module 840 to the processor 810. The power management module 841 may also receive an input of the battery 842 to supply power to the mobile phone.

A wireless communication function of the mobile phone may be implemented by using the antenna 1, the antenna 2, the mobile communication module 850, the wireless communication module 860, the modem processor, the baseband processor, and the like. The antenna 1 and the antenna 2 are configured to transmit and receive an electromagnetic wave signal. Each antenna in the mobile phone may be configured to cover one or more communication bands. Different antennas may be multiplexed to improve antenna utilization. For example, the antenna 1 may be multiplexed as a diversity antenna in a wireless local area network. In some other embodiments, an antenna may be used in combination with a tuning switch.

Optionally, the mobile phone may access a distributed network of a distributed operating system by using a wireless function.

The mobile phone may use the audio module 870, the speaker 870A, the receiver 870B, the microphone 870C, the headset jack 870D, the application processor, and the like to implement an audio function, for example, music playing, recording, and the like.

The sensor module 880 may include a pressure sensor 880A, a gyroscope sensor 880B, a barometric pressure sensor 880C, a magnetic sensor 880D, an acceleration sensor 880E, a distance sensor 880F, an optical proximity sensor 880G, a fingerprint sensor 880H, a temperature sensor 880J, a touch sensor 880K, an ambient light sensor 880L, a bone conduction sensor 880M, and the like.

The display screen 894 is configured to display an image, a video, and the like. The display screen 894 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the mobile phone may include one or N display screens 894, where N is a positive integer greater than 1. For example, the display screen 894 may be configured to display an application interface, or display any display interface that can be displayed by the mobile phone in the application deployment method described in the foregoing embodiments.

The mobile phone implements a display function by using the GPU, the display screen 894, the application processor, and the like. The GPU is a microprocessor for image processing, and is connected to the display screen 894 and the application processor. The GPU is configured to perform mathematical and geometric computation for graphic rendering. The processor 810 may include one or more GPUs that execute program instructions to generate or change display information.

It may be understood that the structure shown in FIG. 8 does not constitute a specific limitation on the mobile phone. In some embodiments, the mobile phone may include more or fewer components than those shown in FIG. 8, or some components may be combined, or some components may be split, or the components may be disposed differently. Alternatively, some components shown in FIG. 8 may be implemented by hardware, software, or a combination of software and hardware.

In addition, when the IoT device is a tablet computer, a handwriting pad, a wearable device (for example, a watch, a wristband, or a headset), a large screen (for example, a smart screen), a notebook computer, an augmented reality (augmented reality, AR)/virtual reality (virtual reality, VR) device (for example, VR glasses), a car (or an on-board device), a camera, a sweeper, a rice cooker, a speaker, a treadmill, an ultra-mobile personal computer (ultra-mobile personal computer, UMPC), a netbook, a personal digital assistant (personal digital assistant, PDA), or another IoT device, for a specific structure of the another IoT device, refer to FIG. 8. For example, components may be added to or removed from the another IoT device based on the structure shown in FIG. 8. Details are not described herein again.

It should be understood that the foregoing embodiments are merely examples for describing the application deployment method provided in this embodiment of this application. In some other possible embodiments, some execution steps may be deleted from or added to the foregoing embodiments, or a sequence of some steps in the foregoing embodiments may be adjusted. This is not limited in this application.

Corresponding to the application deployment method described in the foregoing embodiments, an embodiment of this application provides an application deployment apparatus. The apparatus may be used in a first device, and is configured to implement the step that can be implemented by the first device (namely, the first IoT device) in the application deployment method described in the foregoing embodiments. A function of the apparatus may be implemented by hardware, or may be implemented by hardware executing corresponding software. The hardware or the software includes one or more modules or units corresponding to the foregoing function.

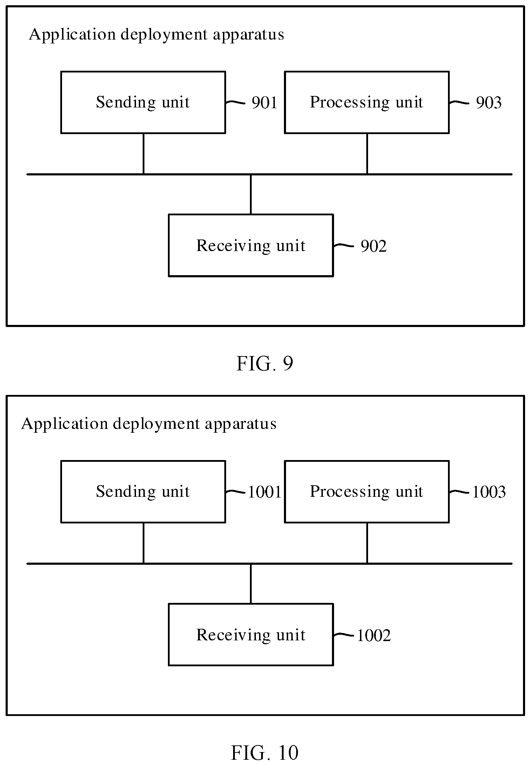

For example, FIG. 9 is a schematic diagram of a structure of an application deployment apparatus according to an embodiment of this application. As shown in FIG. 9, the apparatus may include a sending unit 901, a receiving unit 902, and a processing unit 903. The sending unit 901, the receiving unit 902, and the processing unit 903 may be configured to cooperate to implement the step performed by the first device in the application deployment method described in the foregoing embodiments. For example, the sending unit 901 may be configured to send a first target capability module to a second device. The receiving unit 902 may be configured to receive a first message from the second device. The processing unit 903 may be configured to determine, based on capability information of the second device, the first target capability module suitable for installation on the second device and the like from a plurality of capability modules included in a first application.

It should be understood that the apparatus may further include another module or unit configured to implement the step performed by the first device in the application deployment method described in the foregoing embodiments, for example, a display unit. Such modules or units are not enumerated herein.

Optionally, an embodiment of this application further provides an application deployment apparatus. The apparatus may be used in a second device, and is configured to implement the step performed by the second device (namely, the second IoT device) in the method described in the foregoing method embodiments. A function of the apparatus may be implemented by hardware, or may be implemented by hardware executing corresponding software. The hardware or the software includes one or more modules or units corresponding to the foregoing function.

For example, FIG. 10 is a schematic diagram of another structure of an application deployment apparatus according to an embodiment of this application. As shown in FIG. 10, the apparatus may include a sending unit 1001, a receiving unit 1002, and a processing unit 1003. The sending unit 1001, the receiving unit 1002, and the processing unit 1003 may be configured to cooperate to implement the step performed by the second device in the application deployment method described in the foregoing embodiments. For example, the sending unit 1001 may be configured to send a first message to a first device. The receiving unit 1002 may be configured to receive a first target capability module from the first device. The processing unit 1003 may be configured to decide whether to install the first target capability module or the like.

It should be understood that the apparatus may further include another module or unit configured to implement the step performed by the second device in the application deployment method described in the foregoing embodiments, for example, a display unit. Such modules or units are not enumerated herein.

It should be understood that division of the units (or referred to as modules) in the apparatus is merely division of logical functions. During actual implementation, all or some of the units may be integrated into one physical entity or may be physically separated. In addition, all the units in the apparatus may be implemented in a form in which a processing element invokes software, or may be implemented in a form of hardware; or some of the units may be implemented in a form in which a processing element invokes software, and some of the units may be implemented in a form of hardware.

For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit having a signal processing capability. During implementation, steps in the foregoing methods or the foregoing units may be implemented by using a hardware integrated logic circuit in a processor element, or may be implemented in the form of software invoked by the processing element.

In an example, a unit in the foregoing apparatuses may be one or more integrated circuits configured to implement the foregoing method, for example, one or more application-specific integrated circuits (application-specific integrated circuits, ASICs), one or more digital signal processors (digital signal processors, DSPs), one or more field programmable gate arrays (field programmable gate arrays, FPGAs), or a combination of at least two of these integrated circuit forms.

For another example, when the units in the apparatus may be implemented in a form of scheduling a program by the processing element, the processing element may be a general-purpose processor, for example, a central processing unit (central processing unit, CPU) or another processor that can invoke the program. For another example, these units may be integrated together and implemented in a form of a system-on-a-chip (system-on-a-chip, SOC).

In an implementation, the units, in the foregoing apparatus, that implement the corresponding steps in the foregoing methods may be implemented by using the processing element to schedule the program. For example, the apparatus may include a processing element and a storage element. The processing element invokes a program stored in the storage element, to perform the step performed by the first device or the second device in the method described in the foregoing method embodiments. The storage element may be a storage element, namely, an on-chip storage element, located on the same chip as the processing element.

In another implementation, a program for performing the foregoing method may be in a storage element, namely, an off-chip storage element, on a chip different from that of the processing element. In this case, the processing element invokes the program from the off-chip storage element or loads the program to the on-chip storage element, to invoke and perform the step performed by the first device or the second device in the method described in the foregoing method embodiments.

For example, an embodiment of this application may further provide an apparatus, for example, an electronic device. The electronic device may include a processor, a memory, and a computer program. The computer program is stored in the memory. When the computer program is executed by the processor, the electronic device is enabled to implement the step performed by the first device or the second device in the method described in the foregoing embodiments. The memory may be disposed inside or outside the electronic device. There are one or more processors.

For example, the electronic device may be any IoT device of a mobile phone, a tablet computer, a handwriting pad, a wearable device (for example, a watch, a wristband, or a headset), a large screen (for example, a smart screen), a notebook computer, an augmented reality (augmented reality, AR)/virtual reality (virtual reality, VR) device (for example, VR glasses), a car (or an on-board device), a camera, a sweeper, a rice cooker, a speaker, a treadmill, an ultra-mobile personal computer (ultra-mobile personal computer, UMPC), a netbook, a personal digital assistant (personal digital assistant, PDA), or the like.

In still another implementation, a unit used by the apparatus to implement the step in the foregoing method may be configured as one or more processing elements. The processing element herein may be an integrated circuit, for example, one or more ASICs, one or more DSPs, one or more FPGAs, or a combination of these quasi-integrated circuits. These integrated circuits may be integrated together to form a chip.

For example, an embodiment of this application further provides a chip. The chip may be used in the foregoing electronic device. The chip includes one or more interface circuits and one or more processors. The interface circuits and the processors are connected to each other by using a circuit. The processor receives and executes a computer instruction from the memory of the electronic device by using the interface circuit, to implement the step performed by the first device or the second device in the method described in the foregoing embodiments.

An embodiment of this application further provides a computer program product, including computer-readable code. When the computer-readable code runs in an electronic device, the electronic device is enabled to implement the step performed by the first device or the second device in the method described in the foregoing embodiments.

Based on the descriptions of the foregoing implementations, a person skilled in the art may clearly understand that for the purpose of convenient and brief descriptions, division into the functional modules is merely used as an example for description. In an actual application, the functions can be allocated to different functional modules for implementation as required. In other words, an inner structure of an apparatus is divided into different functional modules, to implement all or some of the foregoing described functions.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software function unit and sold or used as an independent product, the integrated unit may be stored in a readable storage medium.

Based on such an understanding, technical solutions of embodiments of this application essentially, or the part contributing to the conventional technology, or all or some of the technical solutions may be implemented in a form of a software product, for example, a program. The software product is stored in a program product, for example, a computer-readable storage medium, and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a ROM, a RAM, a magnetic disk, an optical disc, or the like.

For example, an embodiment of this application may further provide a computer-readable storage medium. The computer-readable storage medium includes a computer program. When the computer program runs on an electronic device, the electronic device is enabled to implement the step performed by the first device or the second device in the method described in the foregoing embodiments.

Optionally, an embodiment of this application further provides a distributed operating system, including a first device and a second device. The first device is connected to the second device. The first device includes a first application. The first application includes a plurality of capability modules that are capable of being used for installation. The first device may determine, based on capability information of the second device, a first target capability module suitable for installation on the second device from the plurality of capability modules included in the first application, and send the first target capability module to the second device. The second device may receive and install the first target capability module. After installing the first target capability module, the second device may implement a corresponding function by using the first target capability module.

Both the first device and the second device are IoT devices. The first device may be an IoT device that has relatively rich device resources (such as a CPU resource, a memory resource, and a storage resource) and that can be connected to a network independently and can perform human-machine interaction. For example, the first device may be an IoT device such as a mobile phone, a tablet computer, or a notebook computer.

The second device may be any IoT device of a mobile phone, a tablet computer, a handwriting pad, a wearable device (for example, a watch, a wristband, or a headset), a large screen (for example, a smart screen), a notebook computer, an augmented reality (augmented reality, AR)/virtual reality (virtual reality, VR) device (for example, VR glasses), a car (or an on-board device), a camera, a sweeper, a rice cooker, a speaker, a treadmill, an ultra-mobile personal computer (ultra-mobile personal computer, UMPC), a netbook, a personal digital assistant (personal digital assistant, PDA), or the like. For example, the second device may be an IoT device that has fewer device resources than the first device and that cannot be connected to the network independently and/or cannot perform human-machine interaction. For example, the second device may be a handwriting pad, a headset, VR glasses, an on-board device, a rice cooker, a speaker, a treadmill, or the like. Alternatively, the second device may be the same as the first device, that is, the second device is an IoT device that has relatively rich device resources and that can be connected to the network independently and can perform human-machine interaction.

In the distributed operating system, an application installation package in the first device is split into one or more capability modules based on different dimensions. The first device interacts with the second device, so that a corresponding capability module is deployed on the second device, to support the second device in implementing a corresponding function. This can not only greatly reduce storage resources occupied by the application installation package on the second device, but also resolve application deployment problems of some second devices that cannot be connected to the network.

Optionally, the second device may send a first message to the first device, where the first message includes the capability information of the second device. After receiving the first message, the first device may determine, based on the capability information of the second device included in the first message, the first target capability module suitable for installation on the second device from the plurality of capability modules included in the first application.

In this design, the capability information of the second device may be reported to the first device by using the first message, so that the first device can determine, based on the capability information of the second device, the first target capability module suitable for installation on the second device from the plurality of capability modules included in the first application.

In a possible design, the first device may send a query request message to the second device, where the query request message is used to query the capability information of the second device. The second device may send the first message to the first device after receiving the query request message from the first device.

In this design, the first device may actively send the query request message to the second device, so as to trigger the second device to return the first message to the first device based on the query request message.

In some implementations, the first device may send the query request message to the second device when the second device establishes a connection to the first device.

In this implementation, a trigger condition for sending the query request message to the second device by the first device is: The second device establishes the connection to the first device. For example, when the second device accesses a local area network in which the first device is located, the first device may detect access of the second device. When detecting the access of the second device, the first device may actively send the query request message to the second device.

In some other implementations, the first device may display a first interface, where the first interface includes device identifiers of one or more second devices. The first device may receive a first operation, where the first operation is an operation of selecting a device identifier of the second device on the first interface. The first device may send the query request message to the second device in response to the first operation.

In this implementation, a trigger condition for sending the query request message to the second device by the first device is: The first device receives the first operation. For example, the first operation is actively selecting, by a user on the first interface, one or more second devices to which the query request message is to be sent. The first device may send, in response to the first operation of the user, the query request message to the second device actively selected by the user.

In another possible design, the second device may send the first message to the first device when the second device establishes a connection to the first device.

For example, the first device and the second device each may include a distributed network module. When the second device accesses a distributed network in which the first device is located, the second device learns, by using the distributed network module of the second device, that the first device includes a distributed application installation package, so that the second device may actively send the first message to the first device. The distributed network module may be an independent chip, or a software module integrated into a processor in an IoT device.

Optionally, a case in which the second device accesses the distributed network in which the first device is located may include: The second device accesses, for the first time, the distributed network in which the first device is located, and/or the second device accesses, again after being disconnected from the distributed network in which the first device is located, the distributed network in which the first device is located. For example, after being powered down or powered off, the second device may be disconnected from the distributed network in which the first device is located. Then, when the second device is powered up or powered on again, the second device may send the first message to the first device.

In some embodiments, each capability module included in the first application includes a configuration list corresponding to the capability module. That the first device determines, based on capability information of the second device, a first target capability module suitable for installation on the second device from the plurality of capability modules included in the first application includes: The first device determines, based on the capability information of the second device and the configuration list corresponding to each capability module included in the first application, the first target capability module suitable for installation on the second device from the plurality of capability modules included in the first application.

For example, the configuration list corresponding to each capability module includes one or more of a device type suitable for the capability module, a minimum device version requirement corresponding to the device type suitable for the capability module, a minimum device level suitable for the capability module, a hardware capability requirement of the capability module, a central processing unit-application binary interface CPU-ABI type supported by the capability module, and a scenario type suitable for the capability module.

For example, the capability information of the second device includes one or more of a device type, a device version, a device level, a device hardware capability, and a CPU-ABI type of the second device.

Device levels may be obtained by classifying IoT devices based on factors such as whether resources of the IoT devices are rich, and whether the IoT devices can be connected to the network independently and/or can perform human-machine interaction. For example, the IoT devices may be classified into level 0 to level 5 based on capabilities of running memories (random access memories, RAMs), storage memories (read only memories, ROMs), CPUs, and the like of the IoT devices, which correspond to L0 to L5, respectively. A higher level of an IoT device indicates better performance. A level classification manner of the loT devices is not limited herein.

In a possible design, the first device may send attribute information of the first target capability module to the second device. The second device may receive the attribute information of the first target capability module from the first device, and decide, based on the attribute information of the first target capability module, whether to install the first target capability module. The second device may send a download request message to the first device when the second device decides to install the first target capability module. The first device may receive the download request message from the second device, where the download request message includes identification information of the first target capability module. After receiving the download request message, the first device may send the first target capability module to the second device based on the identification information of the first target capability module.

For example, the attribute information of the first target capability module includes one or more of the following: a capability name, version information, and a capability type of the first target capability module, a size of the first target capability module, a quantity of times that the first target capability module is used on the first device, and permission required by the first target capability module.

In this design, the second device may decide, based on the attribute information of the first target capability module, whether to install the first target capability module. The second device may send the download request message to the first device when deciding to install the first target capability module, where the download request message includes the identification information of the first target capability module. The first device may send the first target capability module to the second device after receiving the download request message.

Optionally, the second device includes a preset decision condition. That the second device decides, based on the attribute information of the first target capability module, whether to install the first target capability module includes: When determining, based on the attribute information of the first target capability module, that the first target capability module meets the decision condition, the second device decides to install the first target capability module.

For example, the decision condition includes one or more of the following: remaining storage space of the second device is greater than the size of the first target capability module, remaining power of the second device is greater than a first threshold, the second device is currently in a screen-off and charging state, the quantity of times that the first target capability module is used on the first device is greater than a second threshold, and the permission required by the first target capability module does not include sensitive permission.

In some embodiments, the second device may modify the decision condition in response to a setting operation for the decision condition.

In this embodiment, a user may actively set the decision condition on the first device or the second device. The second device may modify the decision condition in response to the setting operation of the user for the decision condition. Then, the second device may decide, based on the decision condition set by the user, whether to install a capability module.

In another possible design, the first device may display a second interface, where the second interface includes an installation prompt of the first target capability module. The first device may receive a second operation, where the second operation is an operation of selecting to install the first target capability module. The first device may send a second message to the second device in response to the second operation, where the second message indicates the second device to install the first target capability module.

In this design, the user may select, on the second interface provided by the first device, whether to install the first target capability module on the second device. When receiving an operation (namely, the second operation) of selecting, by the user, to install the first target capability module, the first device may indicate, by using the second message, the second device to install the first target capability module.

In still another possible design, the second device may display a third interface, where the third interface includes an installation prompt of the first target capability module. The second device may receive a third operation, where the third operation is an operation of selecting to install the first target capability module. The second device may install the first target capability module in response to the third operation.

In this design, the user may select, on the third interface provided by the second device, whether to install the first target capability module on the second device. The second device may install the first target capability module when receiving an operation (namely, the third operation) of selecting, by the user, to install the first target capability module.

In some embodiments, the distributed operating system further includes a third device. The first device is connected to the third device. The first device may determine, based on capability information of the third device, a second target capability module suitable for installation on the third device from the plurality of capability modules included in the first application, and send the second target capability module to the third device. The third device may receive and install the second target capability module.

Optionally, the first target capability module and the second target capability module are the same or different.

In other words, in this embodiment, the first device may be connected to a plurality of different devices such as the second device and the third device. The first device may determine, based on capability information of different devices connected to the first device, a target capability module suitable for installation on each device from the plurality of capability modules included in the first application, and send, to the device, the target capability module suitable for installation on the device.

Similarly, in the distributed operating system, the first device may be configured to implement all the functions implemented by the first device in the method described in the foregoing method embodiments, and the second device may be configured to implement all the functions implemented by the second device in the method in the sixth aspect. Details are not described herein again.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An application deployment method, wherein the method is applied to a first device, the first device is connected to a second device, the first device comprises a first application, the first application comprises a plurality of capability modules that are capable of being used for installation, the capability module has a capability of implementing one or more functions, and the method comprises:
determining, by the first device based on capability information of the second device, a first target capability module suitable for installation on the second device from the plurality of capability modules comprised in the first application; and
sending, by the first device, the first target capability module to the second device.

2. The method according to claim 1, wherein before the determining, by the first device based on capability information of the second device, a first target capability module suitable for installation on the second device from the plurality of capability modules comprised in the first application, the method further comprises:
receiving, by the first device, a first message from the second device, wherein the first message comprises the capability information of the second device.

3. The method according to claim 2, wherein before the receiving, by the first device, a first message from the second device, the method further comprises:
sending, by the first device, a query request message to the second device, wherein the query request message is used to query the capability information of the second device.

4. The method according to claim 3, wherein the sending, by the first device, a query request message to the second device comprises:
sending, by the first device, the query request message to the second device when the second device establishes a connection to the first device.

5. The method according to claim 3, wherein the sending, by the first device, a query request message to the second device comprises:
displaying, by the first device, a first interface, wherein the first interface comprises device identifiers of one or more second devices;
receiving, by the first device, a first operation, wherein the first operation is an operation of selecting a device identifier of the second device on the first interface; and
sending, by the first device, the query request message to the second device in response to the first operation.

6. The method according to any one of claims 1 to 5, wherein each capability module comprised in the first application comprises a configuration list corresponding to the capability module; and
the determining, by the first device based on capability information of the second device, a first target capability module suitable for installation on the second device from the plurality of capability modules comprised in the first application comprises:
determining, by the first device based on the capability information of the second device and the configuration list corresponding to each capability module comprised in the first application, the first target capability module suitable for installation on the second device from the plurality of capability modules comprised in the first application.

7. The method according to claim 6, wherein the configuration list corresponding to each capability module comprises one or more of a device type suitable for the capability module, a minimum device version requirement corresponding to the device type suitable for the capability module, a minimum device level suitable for the capability module, a hardware capability requirement of the capability module, a central processing unit-application binary interface CPU-ABI type supported by the capability module, and a scenario type suitable for the capability module.

8. The method according to claim 6 or 7, wherein the capability information of the second device comprises one or more of a device type, a device version, a device level, a device hardware capability, and a CPU-ABI type of the second device.

9. The method according to any one of claims 1 to 8, wherein before the sending, by the first device, the first target capability module to the second device, the method further comprises:
sending, by the first device, attribute information of the first target capability module to the second device; and
receiving, by the first device, a download request message from the second device, wherein the download request message comprises identification information of the first target capability module.

10. The method according to claim 9, wherein the attribute information of the first target capability module comprises one or more of the following:
a capability name, version information, and a capability type of the first target capability module, a size of the first target capability module, a quantity of times that the first target capability module is used on the first device, and permission required by the first target capability module.

11. The method according to claim 9, wherein the method further comprises:
displaying, by the first device, a second interface, wherein the second interface comprises an installation prompt of the first target capability module;
receiving, by the first device, a second operation, wherein the second operation is an operation of selecting to install the first target capability module; and
sending, by the first device, a second message to the second device in response to the second operation, wherein the second message indicates the second device to install the first target capability module.

12. The method according to any one of claims 1 to 11, wherein the first device is further connected to a third device, and the method further comprises:
determining, by the first device based on capability information of the third device, a second target capability module suitable for installation on the third device from the plurality of capability modules comprised in the first application; and
sending, by the first device, the second target capability module to the third device.

13. An application deployment method, wherein the method is applied to a second device, the second device is connected to a first device, the first device comprises a first application, the first application comprises a plurality of capability modules that are capable of being used for installation, the capability module has a capability of implementing one or more functions, and the method comprises:
receiving, by the second device, a first target capability module from the first device, wherein the first target capability module is one of the plurality of capability modules comprised in the first application; and
installing, by the second device, the first target capability module.

14. The method according to claim 13, wherein the method further comprises:
sending, by the second device, a first message to the first device, wherein the first message comprises capability information of the second device.

15. The method according to claim 14, wherein before the sending, by the second device, a first message to the first device, the method further comprises:
receiving, by the second device, a query request message from the first device, wherein the query request message is used to query the capability information of the second device.

16. The method according to claim 14, wherein the sending, by the second device, a first message to the first device comprises:
sending, by the second device, the first message to the first device when the second device establishes a connection to the first device.

17. The method according to any one of claims 14 to 16, wherein the capability information of the second device comprises one or more of a device type, a device version, a device level, a device hardware capability, and a CPU-ABI type of the second device.

18. The method according to any one of claims 13 to 17, wherein before the receiving, by the second device, a first target capability module from the first device, the method further comprises:
sending, by the second device, a download request message to the first device, wherein the download request message comprises identification information of the first target capability module.

19. The method according to claim 18, wherein the sending, by the second device, a download request message to the first device comprises:
receiving, by the second device, attribute information of the first target capability module from the first device;
deciding, by the second device based on the attribute information of the first target capability module, whether to install the first target capability module; and
sending, by the second device, the download request message to the first device when the second device decides to install the first target capability module.

20. The method according to claim 19, wherein the attribute information of the first target capability module comprises one or more of the following:
a capability name, version information, and a capability type of the first target capability module, a size of the first target capability module, a quantity of times that the first target capability module is used on the first device, and permission required by the first target capability module.

21. The method according to claim 19 or 20, wherein the second device comprises a preset decision condition, and the deciding, by the second device based on the attribute information of the first target capability module, whether to install the first target capability module comprises:
when determining, based on the attribute information of the first target capability module, that the first target capability module meets the decision condition, deciding, by the second device, to install the first target capability module.

22. The method according to claim 21, wherein the decision condition comprises one or more of the following:
remaining storage space of the second device is greater than the size of the first target capability module, remaining power of the second device is greater than a first threshold, the second device is currently in a screen-off and charging state, the quantity of times that the first target capability module is used on the first device is greater than a second threshold, and the permission required by the first target capability module does not comprise sensitive permission.

23. The method according to claim 21 or 22, wherein the method further comprises:
modifying, by the second device, the decision condition in response to a setting operation for the decision condition.

24. The method according to any one of claims 13 to 23, wherein the installing, by the second device, the first target capability module comprises:
displaying, by the second device, a third interface, wherein the third interface comprises an installation prompt of the first target capability module;
receiving, by the second device, a third operation, wherein the third operation is an operation of selecting to install the first target capability module; and
installing, by the second device, the first target capability module in response to the third operation.

25. A distributed operating system, comprising a first device and a second device, wherein the first device is connected to the second device, the first device comprises a first application, and the first application comprises a plurality of capability modules that are capable of being used for installation;
the first device determines, based on capability information of the second device, a first target capability module suitable for installation on the second device from the plurality of capability modules comprised in the first application, and sends the first target capability module to the second device; and
the second device receives and installs the first target capability module.

26. The system according to claim 25, further comprising a third device, wherein the first device is connected to the third device;
the first device determines, based on capability information of the third device, a second target capability module suitable for installation on the third device from the plurality of capability modules comprised in the first application, and sends the second target capability module to the third device; and
the third device receives and installs the second target capability module.

27. An electronic device, comprising a processor, a memory, and a computer program, wherein the computer program is stored in the memory, and when the computer program is executed by the processor, the electronic device is enabled to implement the method according to any one of claims 1 to 12 or the method according to any one of claims 13 to 24.

28. A computer-readable storage medium, wherein the computer-readable storage medium comprises a computer program, and when the computer program runs on an electronic device, the electronic device is enabled to implement the method according to any one of claims 1 to 12 or the method according to any one of claims 13 to 24.
